# EUROPÄISCHE PATENTSCHRIFT

(11) **EP 3 402 835 B1**
(45) Veröffentlichungstag und Bekanntmachung des Hinweises auf die Patenterteilung: **30.10.2019**
(21) Anmeldenummer: 17700298.7
(22) Anmeldetag: 12.01.2017
(51) Int. Cl.: C08G 59/40, C08G 59/42, C09J 163/00

(54) **EINKOMPONENTIGER HITZEHÄRTENDER EPOXIDKLEBSTOFF MIT VERBESSERTER HAFTUNG**
SINGLE-COMPONENT THERMOSETTING EPOXIDE ADHESIVE WITH IMPROVED ADHESION
ADHESIF EPOXY THERMODURCISSABLE MONOCOMPOSANT A ADHERENCE AMELIOREE

(30) Priorität: 13.01.2016 EP 16151133
(43) Veröffentlichungstag der Anmeldung: 21.11.2018
(73) Patentinhaber: Sika Technology AG, 6340 Baar (CH)
(72) Erfinder: GUTGSELL, Michael, 8610 Uster (CH); HANLEY IV, John, Sterling Heights Michigan 48310 (US)
(74) Vertreter: Sika Patent Attorneys
(86) Internationale Anmeldenummer: PCT/EP2017/050608
(87) Internationale Veröffentlichungsnummer: WO 2017/121826

(56) Entgegenhaltungen:
- WO-A1-2010/124901
- DATABASE WPI Week 201468 Thomson Scientific, London, GB; AN 2014-S91685 XP002758102, & CN 103 952 109 A (SUZHOU ZHINUO NEW MATERIAL TECHNOLOGY CO LTD) 30. Juli 2014 (2014-07-30)

## Beschreibung

### Technisches Gebiet

Die Erfindung betrifft das Gebiet der hitzehärtenden Epoxidklebstoffe.

### Stand der Technik

Einkomponentige hitzehärtende Epoxidklebstoffe werden häufig zum Verbinden von Metallsubstraten wie Stahlblechen eingesetzt, wenn hohe Festigkeiten erforderlich sind, z.B. im Automobilbau.

Stahlbleche mit einem Überzug aus Zink-Magnesium (ZM) zählen zu der am schnellsten wachsenden Gruppe von Stahlprodukten. Sie bieten in vielen Anwendungsfällen eine deutlich bessere Korrosionsbeständigkeit als Bleche mit bisher üblichen Zinküberzügen. Die Haftung von hitzehärtenden Epoxidklebstoffen auf Zink-Magnesium-Oberflächen bei erhöhter Temperatur wie z.B. 80°C ist aber schlecht. Im Schälversuch bei 80 °C zeigt sich ein adhäsives Bruchversagen.

WO 2013/160870 beschreibt ein Verfahren, bei dem ein Stahlblech mit Zink-Magnesium-Überzug mit einer sauren Lösung behandelt wird. Die saure Lösung enthält ein Aminosilan oder ein Epoxysilan. Durch die Vorbehandlung mit der silanhaltigen sauren Lösung wird die Haftung eines Klebers auf dem Zink-Magnesium-Oberfläche verbessert. Dies bedeutet jedoch für den Stahlhersteller einen zusätzlichen Produktionsschritt, was mit Mehrkosten verbunden ist.

Zur Zeit ist nicht bekannt wie das genannte Haftungsproblem auf ZM von der Klebstoffseite her gelöst werden kann. Eine Lösung auf der Klebstoffseite würde diesen Produktionsschritt umgehen bzw. unnötig machen.

Metallsubstrate, bei denen Probleme mit der Haftung von Epoxidharzklebstoffen in der Wärme ebenfalls möglich sind, sind z.B. kaltgewalzter Stahl, Aluminium oder Aluminiumlegierungen sowie Metallsubstrate mit Überzügen aus Aluminium oder Aluminiumlegierungen, Magnesium oder Metallsubstrate mit speziellen Beschichtungen.

### Darstellung der Erfindung

Die Aufgabe der vorliegenden Erfindung ist es daher, einen einkomponentigen hitzehärtenden Epoxidharzklebstoff zur Verfügung zu stellen, welcher die Haftung des gehärteten Klebstoffs auf speziellen Metallsubstraten, insbesondere Metallsubstraten aus Stahl mit einem Zink-Magnesium-Überzug, verbessert, ohne dass eine Vorbehandlung des Metallsubstrats vor der Verklebung erforderlich ist. Es soll insbesondere eine wärmebeständige Haftung erreicht werden, d.h. die Haftung soll auch in der Wärme, z.B. bei einer Temperatur von 80 °C, zufriedenstellend sein. Es soll auch eine verbesserte Winkelschälfestigkeit erreicht werden. Ferner soll die Bildung von Blasen möglichst vermieden werden. Farbänderungen durch Einsatz der Carbonsäure sollten ebenfalls möglichst vermieden werden. Die Klebstoffe sollen auch eine ausreichende Lagerstabilität aufweisen.

Überraschenderweise wurde gefunden, dass diese Aufgabe insbesondere durch den Einsatz relativ geringer Mengen bestimmter Carbonsäuren in einem Epoxidharzklebstoff gelöst werden kann. Die Erfindung betrifft daher den einkomponentigen hitzehärtenden Epoxidharzklebstoff wie in Anspruch 1 definiert.

Durch das Beimischen der Carbonsäure in den Klebstoff kann die Haftung auf speziellen Metallsubstraten wie Stahl mit einem Zink-Magnesium-Überzug deutlich verbessert werden. Insbesondere wird eine wärmebeständige Haftung erreicht. So ist die Haftung des erfindungsgemäßen Epoxidharzklebstoffs auf Stahl mit einem ZM-Überzug auch bei 80 °C immer noch gut.

Die Beimischung von Säuren in diese Systeme ist im Allgemeinen unüblich, da davon ausgegangen wurde, dass die Eigenschaften des Klebstoffs durch Reaktion der Säure mit Klebstoffkomponenten beeinträchtigt wird, was überraschenderweise aber nicht eintrat. So konnten z.B. Verklebungen ohne Probleme hinsichtlich Blasenbildung erhalten werden.

Eine Blasenbildung kann unterschiedliche Gründe haben, z.B. die Zersetzung oder Freisetzung von Wasser wie im Falle der Hydrate (z.B. Zitronensäure). Ein anderer negativer Effekt sind lokale braune Verfärbungen. Es wird davon ausgegangen, dass hierfür die lokale Exothermie eine Rolle spielt. Der in den Versuchen eingesetzte Klebstoff SikaPower-493 ist blau eingefärbt. Bei der teilweise beobachteten Verfärbung von Blau nach Grün wird davon ausgegangen, dass dies durch die Exothermie verursacht wird.

In weiteren Aspekten betrifft die Erfindung ein Verfahren zur Verklebung von Metallsubstraten oder Metallsubstrat umfassenden Gegenständen mit dem erfindungsgemäßen einkomponentigen hitzehärtenden Epoxidharzklebstoff, einen Artikel, der einen Klebverbund umfasst, der nach diesem Verfahren erhältlich ist, sowie die Verwendung des erfindungsgemäßen Epoxidharzklebstoffs zur wärmebeständigen Verklebung von Metallsubstraten.

Bevorzugte Ausführungen der Erfindung sind Gegenstand der abhängigen Ansprüche.

### Wege zur Ausführung der Erfindung

Die vorliegende Erfindung betrifft somit einen einkomponentigen hitzehärtenden Epoxidharzklebstoff, umfassend
a) mindestens ein Epoxidharz mit durchschnittlich mehr als einer Epoxidgruppe pro Molekül;
b) mindestens einen latenten Härter für Epoxidharze; und
c) mindestens eine Carbonsäure ausgewählt aus substituierter oder unsubstituierter Adipinsäure, substituierter oder unsubstituierter Bernsteinsäure, substituierter oder unsubstituierter Phthalsäure, substituierter oder unsubstituierter Terephthalsäure, substituierter oder unsubstituierter Isophthalsäure, substituierter oder unsubstituierter Benzoltricarbonsäure und substituierter oder unsubstituierter Nitrobenzoesäure, wobei 2-Hydroxybernsteinsäure und 2,3-Dihydroxybernsteinsäure als Carbonsäure ausgeschlossen sind,
wobei der Epoxidharzklebstoff 0,0015 bis 0,04 mol der mindestens einen Carbonsäure pro 100 g Epoxidharzklebstoff enthält und der Epoxidharzklebstoff eine Viskosität von 500 - 5'000 Pas bei 25°C aufweist, wobei die Viskosität oszillographisch bestimmt wird mittels eines Rheometers mit beheizbarer Platte (MCR 301, AntonPaar) (Spalt 1000 µm, Mess-Plattendurchmesser: 25 mm (Platte/Platte), Deformation 0,01 bei 5 Hz, Temperatur: 25°C).

Der Epoxidharzklebstoff ist einkomponentig, d.h. die Bestandteile des Epoxidharzklebstoffs, insbesondere das Epoxidharz und der Härter, sind in einer Komponente enthalten, ohne dass bei üblicher Umgebungstemperatur bzw. Raumtemperatur eine Härtung stattfindet. Daher ist der einkomponentige Epoxidharzklebstoff lagerstabil. Er ist daher in dieser Form handelbar, während bei zweikomponentigen Systemen die Mischung der Komponenten erst unmittelbar vor der Anwendung möglich ist.

Die Härtung des einkomponentigen Epoxidharzklebstoffs erfolgt durch Erhitzen, typischerweise bei einer Temperatur von über 70°C, z.B. im Bereich von 100 bis 220 °C. Insofern handelt es sich um einen einkomponentigen hitzehärtenden Epoxidharzklebstoff.

Die Vorsilbe Poly in Ausdrücken wie Polyol oder Polyisocyanat bedeutet, dass die Verbindung zwei oder mehr der genannten Gruppen aufweist. Ein Polyisocyanat ist z.B. eine Verbindung mit zwei oder mehr Isocyanatgruppen.

Der Ausdruck "unabhängig voneinander" wie nachstehend verwendet bedeutet, dass in demselben Molekül mehrere gleich bezeichneten Substituenten gleiche oder unterschiedliche Bedeutung gemäß der Definition aufweisen können.

Die gestrichelten Linien in den Formeln dieses Dokumentes stellen jeweils die Bindung zwischen dem jeweiligen Substituenten und dem dazugehörigen Molekülrest dar.

Unter Raumtemperatur wird hier eine Temperatur von 23 °C verstanden, sofern nicht anders angegeben.

Der hitzehärtende einkomponentige Epoxidharzklebstoff enthält mindestens ein Epoxidharz mit durchschnittlich mehr als einer Epoxidgruppe pro Molekül. Die Epoxidgruppe liegt vorzugsweise als Glycidylethergruppe vor. Das Epoxidharz mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

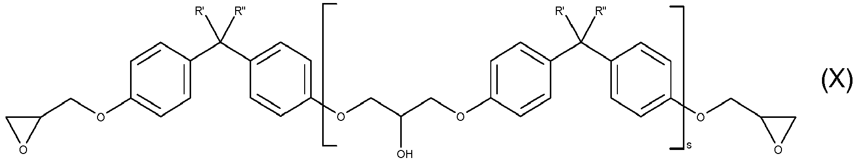

Hierbei stehen die Substituenten R' und R" unabhängig voneinander entweder für H oder CH₃.

Weiterhin steht der Index s für einen Wert von > 1,5, insbesondere von 1,5 bis 12, bevorzugt 2 bis 12.

Derartige Epoxid-Festharze sind kommerziell erhältlich beispielsweise von Dow oder Huntsman oder Momentive.

Verbindungen der Formel (X) mit einem Index s im Bereich von größer 1 bis 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. Epoxid-Festharze der Formel (X) mit einem Index s, der einen Wert von > 1,5 aufweist.

Bevorzugte Epoxid-Flüssigharze weisen die Formel (XI) auf.

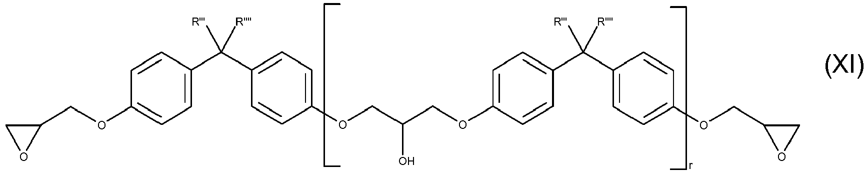

Hierbei stehen die Substituenten R"' und R"" unabhängig voneinander entweder für H oder CH₃. Weiterhin steht der Index r für einen Wert von 0 bis 1. Bevorzugt steht r für einen Wert von 0 bis kleiner als 0,2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Momentive) erhältlich.

Bevorzugt stellt das Epoxidharz ein Epoxid-Flüssigharz der Formel (XI) dar. In einer noch mehr bevorzugten Ausführungsform enthält der hitzehärtende Epoxidharzklebstoff sowohl mindestens ein Epoxid-Flüssigharz der Formel (XI) als auch mindestens ein Epoxid-Festharz der Formel (X).

Der Anteil des Epoxidharzes mit durchschnittlich mehr als einer Epoxidgruppe pro Molekül beträgt vorzugsweise 10 bis 85 Gew.-%, insbesondere 15 bis 70 Gew.-% und bevorzugter 15 bis 60 Gew.-%, bezogen auf das Gesamtgewicht des Epoxidharzklebstoffs.

Der hitzehärtende einkomponentige Epoxidharzklebstoff enthält ferner mindestens einen latenten Härter für Epoxidharze. Latente Härter sind bei Raumtemperatur im Wesentlichen inert und werden durch erhöhte Temperatur, typischerweise bei Temperaturen von 70°C oder mehr, aktiviert, wodurch die Härtungsreaktion gestartet wird. Es können die üblichen latenten Härter für Epoxidharze eingesetzt werden. Es handelt sich bevorzugt um einen latenten Stickstoff enthaltenden Härter für Epoxidharze.

Beispiele für geeignete latente Härter sind Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron), sowie Imidazole und Amin-Komplexe.

Besonders bevorzugt als latenter Härter ist Dicyandiamid.

Der Anteil des latenten Härters beträgt bevorzugt 0,5 bis 12 Gew.-%, bevorzugter 1 bis 8 Gew.-%, bezogen auf das Gesamtgewicht des Epoxidharzklebstoffs.

Ferner enthält der hitzehärtende einkomponentige Epoxidharzklebstoff mindestens eine Carbonsäure ausgewählt aus substituierter oder unsubstituierter Adipinsäure, substituierter oder unsubstituierter Bernsteinsäure, substituierter oder unsubstituierter Phthalsäure, substituierter oder unsubstituierter Terephthalsäure, substituierter oder unsubstituierter Isophthalsäure, substituierter oder unsubstituierter Benzoltricarbonsäure und substituierter oder unsubstituierter Nitrobenzoesäure. 2-Hydroxybernsteinsäure und 2,3-Dihydroxybernsteinsäure sind als Carbonsäure ausgeschlossen.

Die substituierte oder unsubstituierte Benzoltricarbonsäure kann substituierte oder unsubstituierte Hemimellitsäure (1,2,3-Benzoltricarbonsäure), substituierte oder unsubstituierte Trimellitsäure (1,2,4-Benzoltricarbonsäure) oder substituierte oder unsubstituierte Trimesinsäure (1,3,5-Benzoltricarbonsäure) sein, wobei substituierte oder unsubstituierte Trimellitsäure bevorzugt ist.

Die substituierte oder unsubstituierte Nitrobenzoesäure kann substituierte oder unsubstituierte 2-Nitrobenzoesäure, substituierte oder unsubstituierte 3-Nitrobenzoesäure oder substituierte oder unsubstituierte Trimesinsäure 4-Nitrobenzoesäure sein, wobei substituierte oder unsubstituierte 2-Nitrobenzoesäure bevorzugt ist.

Die genannten Carbonsäuren können unsubstituiert oder substituiert sein, wobei die unsubstituierten Carbonsäuren und epoxidierte Carbonsäuren bevorzugt sind. Die unsubstituierten Carbonsäuren sind besonders bevorzugt.

Bei den genannten substituierten Carbonsäuren können ein oder mehrere Wasserstoffatome, die an Kohlenstoffatome gebunden sind, durch Substituenten ersetzt sein, wobei die Substituenten gleich oder verschieden sein können, wenn zwei oder mehr Substituenten vorhanden sind. Die substituierten Carbonsäuren weisen bevorzugt einen oder zwei Substituenten auf.

Beispiele für geeignete Substituenten sind Alkyl, z.B. C₁-C₆-Alkyl, Cycloalkyl, z.B. C₃-C₆-Cycloalkyl, Aryl, z.B. Phenyl, Aralkyl, z.B. durch eine Phenylgruppe substituiertes C₁-C₃-Alkyl, Arylalkyl, z.B. durch eine oder mehrere C₁-C₄-Alkylgruppen substituiertes Phenyl, Alkyloxy, z.B. C₁-C₆-Alkoxy, Aryloxy, z.B. Phenoxy, Aralkyloxy, Hydroxyl, Nitro, Oxo (=O), Mercapto, Phenol und Halogen.

Ein weiteres Beispiel für einen geeigneten Substituenten ist ein Sauerstoffatom, welches unter Bildung eines Epoxidrings an zwei benachbarte Kohlenstoffatome gebunden ist. Solche epoxidierten Carbonsäuren sind als substituierte Carbonsäure bevorzugt. Ein Beispiel ist 2,3-Epoxybernsteinsäure. Epoxybernsteinsäure kann als cis-Epoxybernsteinsäure, trans-Epoxybernsteinsäure oder einer Mischung der beiden Formen vorliegen.

Die mindestens eine Carbonsäure ist bevorzugt ausgewählt aus Bernsteinsäure, Terephthalsäure, Phthalsäure, Isophthalsäure, Trimellitsäure und Nitrobenzoesäure. Die mindestens eine Carbonsäure ist besonders bevorzugt ausgewählt aus Bernsteinsäure, Phthalsäure, Isophthalsäure und Nitrobenzoesäure, am meisten bevorzugt aus Isophthalsäure und Nitrobenzoesäure.

Als die mindestens eine Carbonsäure können zwei oder mehr der genannten Carbonsäuren eingesetzt werden, schon aus praktischen Gründen ist es aber in der Regel bevorzugt, dass nur eine der genannten Carbonsäuren als die mindestens eine Carbonsäure eingesetzt wird.

Als Carbonsäure wird bevorzugt wasserfreie Carbonsäure ohne Hydratwasser eingesetzt.

Der Epoxidharzklebstoff enthält 0,0015 bis 0,04 mol, bevorzugt 0,002 bis 0,03 mol, bevorzugter 0,003 bis 0,02 mol und besonders bevorzugt 0,004 bis 0,015 mol, der mindestens einen Carbonsäure pro 100 g Epoxidharzklebstoff.

Falls wasserhaltige Epoxidharzklebstoffe eingesetzt werden, kann in einer allerdings weniger bevorzugten Variante die betreffende Carbonsäure in situ in dem Klebstoff gebildet werden, indem entsprechende Carbonsäureanhydride verwendet werden. Der Einsatz von Carbonsäureanhydriden zur in situ Bildung der Carbonsäuren in dem einkomponentigen hitzehärtenden Epoxidharzklebstoff ist aber nicht bevorzugt.

Der einkomponentige hitzehärtende Epoxidharzklebstoff kann gegebenenfalls mindestens ein endständig blockiertes Polyurethanprepolymer umfassen. Es ist bevorzugt, dass der Epoxidharzklebstoff mindestens ein endständig blockiertes Polyurethanprepolymer umfasst. Bei dem endständig blockierten Polyurethanprepolymer handelt es sich insbesondere um ein Polyurethanprepolymer mit endständigen Isocyanatgruppen, wobei die endständigen Isocyanatgruppen mit einer Blockierungsgruppe blockiert sind. Diese können durch Umsetzung eines Polyurethanprepolymer mit endständigen Isocyanatgruppen mit einem üblichen Blockierungsmittel erhalten werden.

Bei dem mindestens einen endständig blockierten Polyurethanprepolymer handelt es sich bevorzugt um ein endständig blockiertes Polyurethanprepolymer der Formel (I).

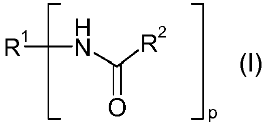

Hierbei steht R¹ für einen p-wertigen Rest eines mit Isocyanatgruppen terminierten linearen oder verzweigten Polyurethanprepolymers nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

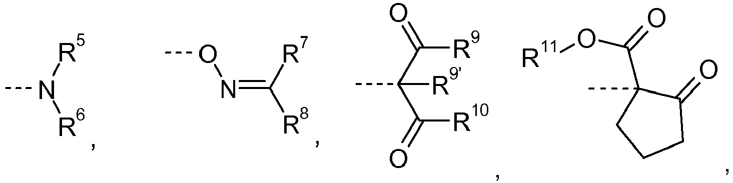

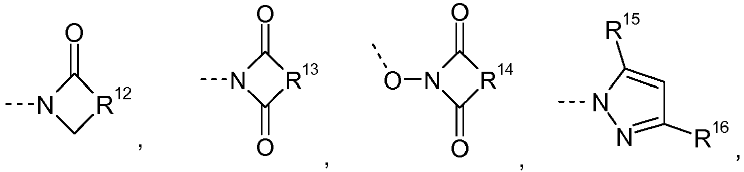

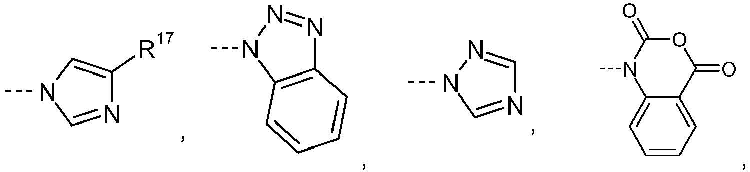

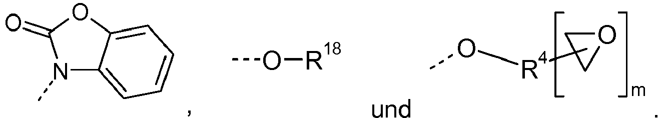

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher gegebenenfalls substituiert ist.

Weiterhin stehen R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxyl-gruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen und m für einen Wert von 1, 2 oder 3.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A. Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln

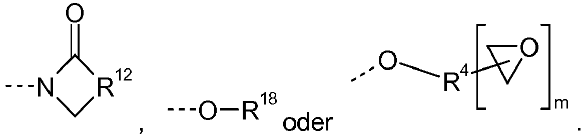

Als Substituent der Formel 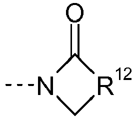 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt. Besonders bevorzugte Bespiele für derartigen Reste R² sind Reste, welche ausgewählt sind aus der Gruppe bestehend aus

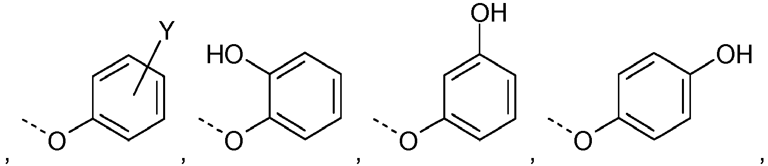

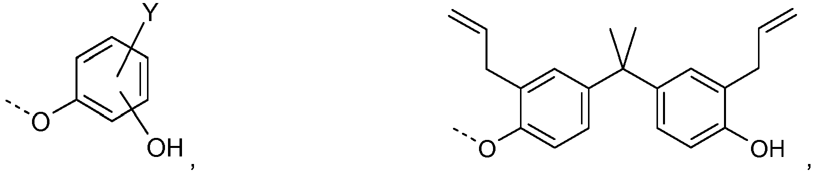

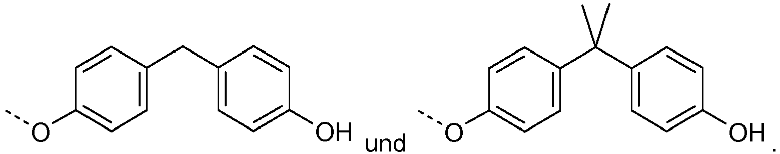

Der Rest Y steht hierbei für einen gesättigten, aromatischen oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl, Phenyl, Alkylether, Carbonsäureester oder ein ungesättigter C₁₅-Alkylrest mit 1 bis 3 Doppelbindungen bevorzugt.

Meist bevorzugt steht R² für

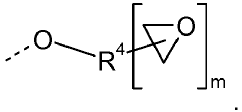

Die Herstellung des endständig blockierten Polyurethanprepolymers der Formel (I) erfolgt aus dem Isocyanatgruppen terminierten linearen oder verzweigten Polyurethanprepolymer mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppengruppen, auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxyl-gruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, z.B. die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0,02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von BASF unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hypox® CTBN von Emerald Perfomance Materials) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentgewichten von 300 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Desweiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hypro® ATBN von Emerald Perfomance Materials vertrieben werden, sowie weitere aminoterminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII) 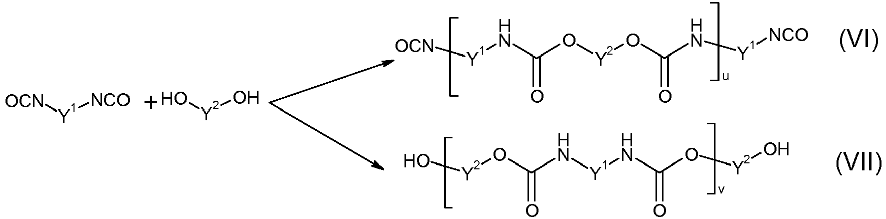 Die Reste Y¹ und Y² stellen einen divalenten organischen Rest dar und die Indizes u und v variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer der folgenden Formel gebildet werden:

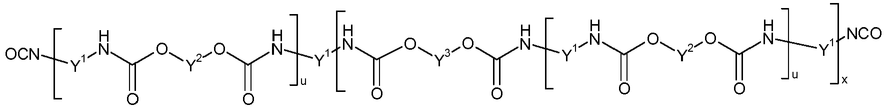

Aus der Spezies der Formel (VII) und einem Diisocyanat mit einem divalenten organischen Rest Y⁴ kann ein kettenverlängertes Polyurethanprepolymer der folgenden Formel gebildet werden:

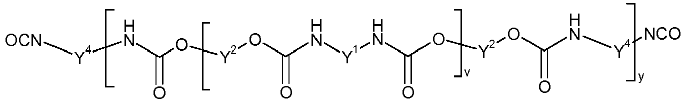

Die Indizes x und y variieren je nach Stöchiometrieverhältnis von 1 bis typischerweise 5, und sind insbesondere 1 oder 2.

Weiterhin kann auch die Spezies der Formel (VI) mit der Spezies der Formel (VII) umgesetzt werden, so dass ein NCO-Gruppen aufweisendes kettenverlängertes Polyurethanprepolymer entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polyurethanprepolymeren der Formel (I) beziehungsweise die Applikation des Klebstoffs erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymers nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenbis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

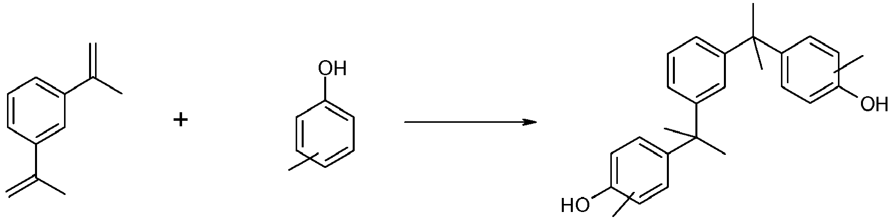

Besonders bevorzugt sind schwerflüchtige Bisphenole. Als meist bevorzugt gelten Bisphenol-M, Bisphenol-S und 2,2'-Diallyl-Bisphenol-A.

Bevorzugt weist das **Q_{PP}** 2 oder 3 phenolische Gruppen auf.

In einer ersten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanprepolymer aus mindestens einem Diisocyanat oder Triisocyanat sowie aus einem, gegebenenfalls substituierten, Polyphenol **Q_{PP}** hergestellt. Die Herstellung des Polyurethanprepolymers erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Als besonders bevorzugte Isocyanat-reaktive Verbindungen R²H gilt die Monohydroxyl-Epoxidverbindung der Formel (V).

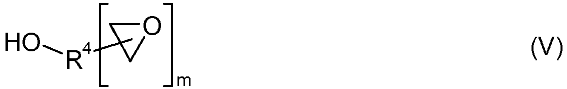

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (V) weist 1, 2 oder 3 Epoxidgruppen auf. Die Hydroxylgruppe dieser Monohydroxyl-Epoxidverbindung (V) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IX), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IX), die bei der Reaktion von Bisphenol-F (R = H) oder des Gemisches von Bisphenol-A und Bisphenol-F mit Epichlorhydrin gebildet werden.

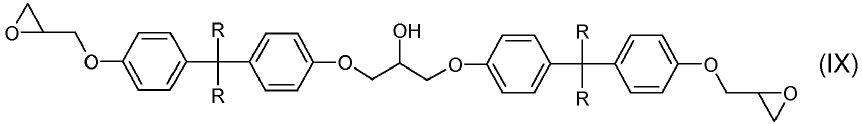

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelsübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R⁴ ist bevorzugt ein dreiwertiger Rest der Formel 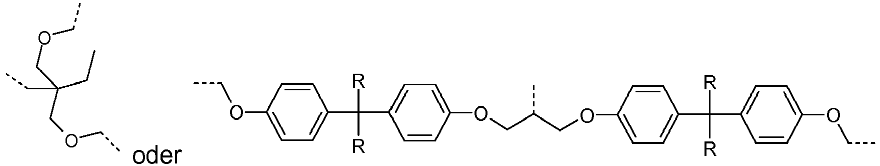 wobei R für Methyl oder H steht.

Die freie primäre oder sekundäre OH-Funktionalität der Monohydroxyl-Epoxidverbindung der Formel (V) lässt eine effiziente Umsetzung mit terminalen Isocyanatgruppen von Prepolymeren zu, ohne dafür unverhältnismässige Überschüsse der Epoxidkomponente einsetzen zu müssen.

Sofern eingesetzt, kann die Menge des endständig blockierten Polyurethanprepolymers, insbesondere des endständig blockierten Polyurethanprepolymers der Formel (I), z.B. 1 bis 45 Gew.-%, bevorzugt 3 bis 35 Gew.-%, bezogen auf das Gesamtgewicht des einkomponentigen hitzehärtenden Epoxidharzklebstoffs, betragen.

Ferner kann der einkomponentige hitzehärtende Epoxidharzklebstoff gegebenenfalls mindestens einen Füllstoff enthalten, was eine bevorzugte Ausführungsform darstellt. Bevorzugt Beispiele für geeignete Füllstoffe sind Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Graphit oder Farbpigmente. Der Füllstoff kann z.B. organisch beschichtet oder unbeschichtet sein. Solche Füllstoffe sind im Handel erhältlich.

Es können ein oder mehrere Füllstoffe eingesetzt werden. Sofern eingesetzt, beträgt der Anteil an dem mindestens einen Füllstoff z.B. 3 bis 50 Gew.-%, bevorzugt 5 bis 35 Gew.-%, bevorzugter 5 bis 25 Gew.-%, bezogen auf das Gesamtgewicht des einkomponentigen hitzehärtenden Epoxidharzklebstoffs.

Der hitzehärtende Epoxidharzklebstoff kann ferner gegebenenfalls ein Thixotropiermittel auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.

Das Harnstoffderivat ist, sofern eingesetzt, bevorzugt in einem Trägermaterial vorhanden. Das Trägermaterial kann ein Weichmacher sein, vorzugsweise ein Phthalat oder ein Adipat, z.B. Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht reagierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit ε-Caprolactam.

Der Anteil des Thixotropiermittels beträgt z.B. 0 bis 40 Gew.-%, bevorzugt 5 bis 25 Gew.-%, bezogen auf das Gesamtgewicht des einkomponentigen hitzehärtenden Epoxidharzklebstoffs. Das Gewichtsverhältnis von Harnstoffderivat zum Trägermittel, falls vorhanden, liegt z.B. im Bereich von 2 / 98 bis 50 / 50, bevorzugt 5 / 95 - 25 /75.

Der einkomponentige hitzehärtende Epoxidharzklebstoff enthält gegebenenfalls und bevorzugt weiterhin einen Flüssigkautschuk. Hierbei kann es sich z.B. um ein carboxyl- oder epoxidterminiertes Polymer handeln.

In einer ersten Ausführungsform kann dieser Flüssigkautschuk ein carboxyl- oder epoxidterminiertes Acrylnitril/Butadien-Copolymer oder ein Derivat davon sein. Derartige Flüssigkautschuke sind z.B. unter dem Namen Hypro / Hypox® CTBN und CTBNX und ETBN von Emerald Perfomance Materials, kommerziell erhältlich. Als Derivate sind insbesondere Epoxidgruppen aufweisende Elastomer-modifizierte Prepolymere, wie sie unter der Produktlinie Polydis®, insbesondere aus der Produktelinie Polydis® 36.., von der Firma Struktol® (Schill+Seilacher Gruppe, Deutschland) oder unter der Produktlinie Albipox (Evonik, Deutschland) kommerziell vertrieben werden, geeignet.

In einer zweiten Ausführungsform kann dieser Flüssigkautschuk ein Polyacrylatflüssigkautschuk sein, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow erhältlich.

Es können natürlich auch Mischungen von Flüssigkautschuken verwendet werden, insbesondere Mischungen von carboxyl- oder epoxidterminierten Acrylnitril/Butadien-Copolymeren oder von Derivaten davon.

Der Flüssigkautschuk wird, sofern eingesetzt, z.B. in einer Menge von 1 bis 35 Gew.-%, insbesondere 1 bis 25 Gew.-%, bezogen auf das Gewicht des einkomponentigen hitzehärtenden Epoxidharzklebstoffs, eingesetzt.

Der einkomponentige hitzehärtende Epoxidharzklebstoff enthält ferner gegebenenfalls einen Zähigkeitsverbesserer, insbesondere einen festen Zähigkeitsverbesserer. Der Einsatz eines Zähigkeitsverbesserers ist bevorzugt. Zähigkeitsverbesserer dienen zur Verbesserung der Zähigkeit des gehärteten Epoxidharzklebstoffs und sind dem Fachmann auf dem Gebiet bekannt. Durch den Zusatz eines Zähigkeitsverbesserers, insbesondere eines festen Zähigkeitsverbesserers, zum Epoxidharzklebstoff kann bereits bei geringen Zuschlägen von z.B. 0,1 bis 15 Gew.-%, insbesondere 0,5 bis 8 Gew.-%, bezogen auf das Gewicht des einkomponentigen hitzehärtenden Epoxidharzklebstoffs, eine deutliche Zunahme der Zähigkeit bewirkt werden. Dadurch kann der gehärtete Klebstoff eine höherer Biege-, Zug-, Schlag- oder Stossbeanspruchung aufnehmen, bevor die Matrix einreisst oder bricht.

Ein Beispiel für einen festen Zähigkeitsverbesserer ist ein organisches Ionen-getauschtes Schichtmineral. Das organisches Ionen-getauschte Schichtmineral kann ein Kationen-getauschtes Schichtmineral oder ein Anionen-getauschtes Schichtmineral sein. Es ist auch möglich, dass der Klebstoff ein Kationen-getauschtes Schichtmineral und ein Anionen-getauschtes Schichtmineral enthält.

Das Kationen-getauschte Schichtmineral kann z.B. erhalten werden aus einem Schichtmineral, bei welchem zumindest ein Teil der Kationen durch organische Kationen ausgetauscht worden sind. Beispiele für derartige Kationen-getauschte Schichtmineralien sind diejenigen, welche in US 5,707,439 oder in US 6,197,849 erwähnt sind. Ebenso ist dort das Verfahren zur Herstellung dieser Kationen-getauschten Schichtminerale beschrieben. Bevorzugt als Schichtmineral ist ein Schichtsilikat. Bevorzugt handelt es sich beim Schichtmineral um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich ein Schichtmineral wie Kaolinit oder ein Montmorillionit oder ein Hectorit oder ein Illit gezeigt.

Zumindest ein Teil der Kationen des Schichtminerals wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale sind dem Fachmann unter dem Term Organoclay oder Nanoclay bekannt und sind kommerziell z.B. unter den Gruppennamen Tixogel®, Cloisite® (Altana) oder Nanomer® (Nanocor Inc.) erhältlich.

Ein Anionen-getauschtes Schichtmineral wird z.B. erhalten aus einem Schichtmineral, bei welchem zumindest ein Teil der Anionen durch organische Anionen ausgetauscht worden sind. Ein Beispiel für ein derartig Anionen-getauschtes Schichtmineral ist ein Hydrotalcit, bei dem zumindest ein Teil der Carbonat-Anionen der Zwischenschichten durch organische Anionen ausgetauscht wurden. Ein weiteres Beispiel sind funktionalisierte Alumoxane wie z.B. im US Patent 6 322890 beschrieben.

Der feste Zähigkeitsverbesserer kann in einer zweiten Ausführungsform ein Blockcopolymer sein. Das Blockcopolymer wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA)-Copolymere, erhältlich z.B. unter dem Namen GELOY 1020 von Sabic.

Besonders bevorzugte Blockcopolymere sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Der feste Zähigkeitsverbesserer kann in einer dritten Ausführungsform ein Core-Shell Polymer sein. Core-Shell-Polymere bestehen aus einem elastischen Kernpolymer und einem starren Schalen-Polymer. Besonders geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Arkema, Paraloid™ von Dow oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Omnova oder Nanoprene von Lanxess oder Paraloid EXL von Dow.

Weitere vergleichbare Beispiele für Core-Shell-Polymere werden unter dem Namen Albidur™ von Evonik, Deutschland, angeboten.

Der feste Zähigkeitsverbesserer kann in einer vierten Ausführungsform ein festes Umsetzungsprodukt eines carboxylierten festen Nitrilkautschuks mit überschüssigem Epoxidharz sein.

Als fester Zähigkeitsverbesserer sind Core-Shell Polymere bevorzugt. Der hitzehärtende Epoxidharzklebstoff kann das feste Core-Shell Polymer, sofern eingesetzt, z.B. in einer Menge von 0,1 bis 15 Gew.-%, vorzugsweise 1 bis 8 Gew.-%, bezogen auf das Gewicht des einkomponentigen hitzehärtenden Epoxidharzklebstoffs, enthalten.

In einer Ausführungsform kann der einkomponentige hitzehärtende Epoxidharzklebstoff gegebenenfalls ein physikalisches oder chemisches Treibmittel enthalten. Solche Treibmittel sind z.B. als Expancel™ der Firma Akzo Nobel oder Celogen™ der Firma Chemtura erhältlich. Der Anteil des Treibmittels, sofern eingesetzt, beträgt z.B. 0,1 bis 3 Gew.-%, bezogen auf das Gewicht des einkomponentigen hitzehärtenden Epoxidharzklebstoffs.

In einer bevorzugten Ausführungsform enthält der einkomponentige hitzehärtende Epoxidharzklebstoff gegebenenfalls zusätzlich mindestens einen Epoxidgruppen-tragenden Reaktivverdünner. Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Der Gesamtanteil des epoxidgruppentragenden Reaktivverdünners, sofern eingesetzt, beträgt z.B. 0,5 bis 20 Gew.-%, bevorzugt 1 bis 8 Gew.-%, bezogen auf das Gewicht des einkomponentigen hitzehärtenden Epoxidharzklebstoffs.

Der einkomponentige hitzehärtende Epoxidharzklebstoff kann einen oder mehrere weitere Bestandteile umfassen, die auf diesem Gebiet üblich sind, z.B. Katalysatoren, Hitze- und/oder Lichtstabilisatoren, Thixotropiermittel, Weichmacher, Lösungsmittel, mineralische oder organische Füllstoffe, Farbstoffe, Haftvermittler und Pigmente.

Der Klebstoff kann gegebenenfalls auch Abstandhalter enthalten. Abstandshalter können zwei Körper auf räumliche Distanz halten. Der Abstandshalter kann hohl sein. Bei dem Abstandshalter handelt es sich insbesondere um Partikel, die hohl sein können oder nicht. Die Abstandhalter weisen vorteilhaft eine Partikelgrösse von weniger als 1 mm auf. Der Abstandhalter verfügt vorteilhaft über eine möglichst enge Grössenverteilung, insbesondere eine monomodale Grössenverteilung.

Die Abstandshalter können eine beliebige Form aufweisen, wobei Kugeln und Würfel als Abstandhalter bevorzugt sind. Beispiele für hohle Abstandhalter sind Glashohlkugeln, Keramikhohlkugeln oder Stahlhohlkugeln.

Die Abstandhalter können aus unterschiedlichen Materialien gefertigt sein. Der Abstandhalter weist bevorzugt eine Härte nach der Mohs-Härteskala von grösser als 5, bevorzugt grösser als 6, insbesondere grösser als 7, auf. Der Abstandhalter ist bevorzugt aus Glas, Keramik, Metall, z.B. Eisenmetalle, Buntmetalle oder Weissmetalle, Metalllegierung, Aluminumoxid, Siliziumdioxid, Zirkoniumoxid, Nitrid, insbesondere Bornitrid, oder Carbid, insbesondere Siliziumcarbid. Meist bevorzugt ist der Abstandhalter aus Glas, Stahl oder Keramik.

Der Anteil des Abstandhalters, sofern eingesetzt, ist z.B. derart gewählt, dass der Volumenanteil des Abstandhalters nicht mehr als 10 Vol.-%, insbesondere 0,1 bis 5 Vol.-%, bevorzugt 0,5 bis 4 Vol.-%, bezogen auf den einkomponentigen hitzehärtenden Epoxidharzklebstoff, beträgt.

Die Abstandhalter können in den einkomponentigen hitzehärtenden Epoxidharzklebstoff bei seiner Herstellung eingebracht werden oder sie können während oder unmittelbar nach dem Applizieren des Klebstoffs den Klebstoff eingemischt, eingeblasen, eingestreut oder aufgestreut werden. Derartige gegebenenfalls vorhandene Abstandhalter werden als Bestandteil des Klebstoffs betrachtet.

Der einkomponentige hitzehärtende Epoxidharzklebstoff weist eine Viskosität von 500 - 5'000 Pas bei 25°C, insbesondere 500 - 4'000 Pas bei 25°C auf. Besonders bevorzugt weist die Viskosität bei 25 °C einen Wert zwischen 1000 Pas und 4000 Pas auf. Meist bevorzugt beträgt die Viskosität bei 25 °C zwischen 1000 Pas und 3000 Pas, insbesondere zwischen 1100 und 2800 Pas.

Die Viskosität wird hierbei oszillographisch mittels eines Rheometers mit beheizbarer Platte (MCR 301, AntonPaar) gemessen (Spalt 1000 µm, Mess-Plattendurchmesser: 25 mm (Platte/Platte), Deformation 0,01 bei 5 Hz, Temperatur: 25°C). Bei 60°C weist der Klebstoff vorteilhaft eine Viskosität (entsprechend bei 60°C gemessen) zwischen 600 und 50 Pas auf. Bei 50°C weist der Klebstoff vorteilhaft eine Viskosität (entsprechend bei 50°C gemessen) zwischen 800 und 150 Pas auf.

Der erfindungsgemässe Epoxidharzklebstoff kann nicht nur als Klebstoff, sondern gegebenenfalls auch als Dichtstoff oder Beschichtungszusammensetzung verwendet werden.

Ein weiterer Aspekt der vorliegenden Erfindung betrifft ein Verfahren zur Verklebung von Substraten, insbesondere Metallsubstraten, umfassend die Schritte
a) Applikation eines erfindungsgemäßen einkomponentigen hitzehärtenden Epoxidharzklebstoffs wie vorstehend definiert auf ein erstes Substrat, insbesondere Metallsubstrat;
b) Kontaktieren des applizierten Epoxidharzklebstoffs mit einem zweiten Substrat, insbesondere Metallsubstrat, unter Bildung eines Klebverbunds; und
c) Aushärten des Epoxidharzklebstoffs im Klebverbund bei einer Temperatur im Bereich von 100 bis 220 °C.

Das erste und/oder zweite Substrat, insbesondere Metallsubstrat, können jeweils als solche oder als Teil eines Gegenstands, d.h. eines Gegenstands, der das erste bzw. zweite Substrat, insbesondere Metallsubstrat, umfasst, eingesetzt werden. Bevorzugt werden die Substrate, insbesondere Metallsubstrate, als solche eingesetzt. Das erste und das zweite Substrat, insbesondere Metallsubstrat, können aus dem gleichen oder einem unterschiedlichen Material sein.

Das erste und/oder zweite Substrat sind bevorzugt Metallsubstrate. Es sind aber gegebenenfalls auch hitzebeständige Kunststoffe wie z.B. Polyamide (PA), Polyphenylenether, z.B. Noryl®, oder carbonfaserverstärkte Kunststoffe (CFK) als erstes und/oder zweites Substrat denkbar.

Als erstes und/oder zweites Metallsubstrat sind grundsätzlich alle vom Fachmann bekannten Metallsubstrate geeignet, insbesondere in Form eines Blechs, wie sie z.B. im Transportmittelbau, z.B. in der Automobilindustrie, oder bei der Herstellung von Weisswaren benutzt werden.

Beispiele für das erste und/oder zweite Metallsubstrat sind Metallsubstrate, insbesondere Bleche, aus Stahl, insbesondere elektrolytisch verzinktem Stahl, feuerverzinktem Stahl oder beöltem Stahl, Bonazinkbeschichtetem Stahl, und nachträglich phosphatiertem Stahl, sowie Aluminium insbesondere in den im Autobau typischerweise vorkommenden Varianten und sowie Magnesium oder Magnesiumlegierungen.

Das erste und/oder zweite Metallsubstrat sind aber besonders bevorzugt ein Metallsubstrat, insbesondere ein Blech, ausgewählt aus Stahl mit einem Zink-Magnesium Überzug, feuerverzinktem Stahl mit einer Zinksulfat und/oder Zinkhydroxysulfat umfassenden Beschichtung, kaltgewalztem Stahl, Aluminium, Aluminiumlegierung oder einem Metall, insbesondere Stahl, mit einem Überzug aus Aluminium oder einer Aluminiumlegierung, Metallsubstraten, insbesondere Stahlsubstraten, mit einer Umformhilfe als Beschichtung, und Magnesium oder Magnesiumlegierungen. Noch mehr bevorzugt ist ein Metallsubstrat, insbesondere ein Blech, ausgewählt aus Stahl mit einem Zink-Magnesium Überzug, feuerverzinktem Stahl mit einer Zinksulfat und/oder Zinkhydroxysulfat umfassenden Beschichtung oder kaltgewalztem Stahl ohne Verzinkung. Am meisten bevorzugt ist das erste und/oder zweite Metallsubstrat ein Metallsubstrat, insbesondere ein Blech, aus Stahl mit einem Zink-Magnesium Überzug.

Stahl mit einem Zink-Magnesium Überzug (ZM-Überzug) sind den Fachleuten bekannt und wird von verschiedenen Herstellern angeboten. Der ZM-Überzug auf dem Stahl wird wie bei der üblichen Feuerverzinkung durch eine Badverzinkung erhalten, wobei das Bad zusätzlich zum Zink auch Magnesium und gegebenenfalls Aluminium enthält. Stahl mit einem ZM-Überzug, der auch Aluminium enthält, wird manchmal auch als Stahl mit einem Zink-Aluminium-Magnesium (ZAM) Überzug bezeichnet. Stahl mit einem ZM-Überzug schließt hier auch Stahl mit einem ZAM-Überzug ein.

Feuerverzinkter Stahl mit einer Zinksulfat und/oder Zinkhydroxysulfat umfassenden Beschichtung ist im Handel erhältlich. Insbesondere handelt es hierbei um Stähle, die nach dem sogenannten NIT-Verfahren (NIT = New Inorganic Treatment) erhalten werden, das von ArcelorMittal entwickelt wurde. Hierbei wird feuerverzinkter Stahl mit einer Lösung, die Sulfat und gegebenenfalls Zink enthält, behandelt, wodurch Zinksulfat und/oder Zinkhydroxysulfat auf der feuerverzinkten Oberfläche abgeschieden werden. Einzelheiten zu diesem Verfahren und den erhaltenen Beschichtungen sind z.B. in der EP-A1-2450470 beschrieben, worauf hiermit Bezug genommen wird.

Die vorstehend beschriebene Beschichtung, auch als NIT bezeichnet, ist eine spezielle Beschichtung zur Verbesserung der tribologischen Eigenschaften beim Unformen. Man nennt solche Beschichtungen auch Umformhilfen. Andere Umformhilfen sind bekannt. Beispiele für Umformhilfen auf Metallsubstraten, insbesondere Stahlsubstraten, sind z.B. Prelube-Öle, Drylubes (Trockenschmierstoffe) oder Phosphatierungen. Substrate mit zusätzlichen Umformhilfen werden von verschiedenen Stahlherstellern angeboten. ThyssenKrupp-Stahl bietet solche Substrate z.B. unter der Bezeichnung Bonderite® an. Salzgitter hat zusammen mit der Fa. Fuchs Petrolube eine Umformhilfe entwickelt, welche als Trenoil Advanced Tribo Primer (ATP) vermarktet wird.

Der kaltgewalzte Stahl ist vorzugsweise nicht verzinkter kaltgewalzter Stahl.

Bei der Aluminiumlegierung kann es sich z.B. um eine Zink-AluminiumLegierung handeln. Bei dem Metall, insbesondere Stahl, mit einem Überzug aus einer Aluminiumlegierung kann es sich daher z.B. um ein Metall, insbesondere Stahl, mit einem Zink-Aluminium-Überzug handeln. Der Zink-Aluminium-Überzug auf dem Metall, insbesondere Stahl, kann durch übliche Feuerverzinkung durch eine Badverzinkung erhalten werden, wobei das Bad zusätzlich zum Zink auch Aluminium enthält.

Beispiele für Aluminiumlegierungen sind Aluminiumlegierungen mit Magnesium (Aluminium 5000 bzw. aus der 5-er Reihe), Aluminiumlegierungen mit Silizium (Aluminium 6000 bzw. aus der 6-er Reihe) und Aluminiumlegierungen mit Zink (Aluminium 7000 bzw. aus der 7-er Reihe). Die Aluminiumlegierung ist insbesondere als Substrat, weniger als Überzug geeignet.

Magnesium kommt insbesondere als Substrat in Frage.

Der einkomponentige hitzehärtende Epoxidharzklebstoff wird im Schritt (a) des erfindungsgemässen Verfahrens auf das erste Substrat, insbesondere Metallsubstrat, aufgetragen. Dies erfolgt z.B. bei einer Applikationstemperatur des Klebstoffs von 10°C bis 80°C, bevorzugt von 15°C bis 60°C, bevorzugter von 30 bis 60°C. Die Applikation erfolgt vorzugsweise in Form einer Klebstoffraupe. Ein automatischer Auftrag ist bevorzugt.

Der Klebstoffauftrag kann auf der ganzen Oberfläche oder auf einem Teil der Oberfläche des ersten Substrats, insbesondere Metallsubstrats, erfolgen. In einer typischen Anwendung kann der Klebstoff z.B. nur in einem Randbereich des Substrats, insbesondere Metallsubstrats, appliziert werden.

In einem weiteren Schritt wird der auf dem ersten Substrat, insbesondere Metallsubstrat, applizierte Epoxidharzklebstoff mit dem zweiten Substrat, insbesondere Metallsubstrat, kontaktiert, um einen Klebverbund zu bilden.

Zur Aushärtung des Epoxidharzklebstoffs im Klebverbund wird der Klebstoff auf eine Temperatur im Bereich von 100 bis 220 °C, bevorzugt 120 bis 200°C, erhitzt. Die Erhitzung kann z.B. durch Infrarotstrahlung, Induktionsheizung oder in einem Ofen, z.B. einem KTL-Ofen (KTL = Kathodische Tauchlackierung), erfolgen. Auf diese Weise wird der Klebverbund mit dem gehärteten Epoxidharzklebstoff erhalten.

Die Aushärtung des Epoxidharzklebstoffs im Klebverbund kann in einem Schritt erfolgen, es ist aber auch eine Aushärtung in zwei oder mehr Schritten möglich, wobei zwischen oder während den Aushärtungsschritte zusätzlich Arbeitsschritte, z.B. eine Wäsche und/oder eine Tauchlackierung, z.B. eine KTL-Tauchlackierung, eines oder beider Substrate, insbesondere Metallsubstrate, mit anschließender Wäsche, zwischengeschaltet werden können.

Die Epoxidharzzusammensetzung im Klebverbund kann z.B. in einem ersten Schritt auf eine Temperatur von 100 bis 130 °C, bevorzugt von 115 bis 125°C, und in einem zweiten Schritt auf eine Temperatur von 140 - 220 °C, insbesondere von 140 - 200°C, bevorzugt zwischen 160 - 190°C, erhitzt werden.

Zwischen den beiden Schritten können weitere Arbeitsschritte erfolgen, z.B. eine Kontaktierung mit einer Waschflüssigkeit, z.B. bei einer Temperatur von 20 bis 100°C, bevorzugt 40 und 70°C, und/oder eine Tauchlackierung eines oder beider Substrate, insbesondere Metallsubstrate, in einem KTL-Bad, wobei die Härtung des Epoxidharzklebstoff im zweiten Schritt z.B. gleichzeitig mit der Härtung des aufgebrachten Tauchlacks durchgeführt werden kann.

Der erfindungsgemäße einkomponentige hitzehärtende Epoxidharzklebstoff und das erfindungsgemäße Verfahren eignen sich insbesondere zur Verklebung von Substraten, insbesondere Metallsubstraten, für die Herstellung von Transportmitteln, insbesondere Automobilen, Bussen, Lastkraftwagen, Schienenfahrzeugen, Schiffen oder Luftfahrzeugen, oder Weisswaren, insbesondere Waschmaschinen, Tumbler oder Geschirrspülern, oder Teilen davon, bevorzugt Fahrzeugen oder Anbauteilen davon.

Ein weiterer Aspekt der Erfindung betrifft einen Artikel, umfassend einen gehärteten Klebverbund, wobei der Klebverbund nach dem vorstehend beschriebenen erfindungsgemäßen Verfahren erhältlich ist.

Der Artikel kann z.B. ein Transportmittel, insbesondere ein Automobil, Bus, Lastkraftwagen, Schienenfahrzeug, Schiff oder Luftfahrzeug, oder eine Weissware, insbesondere eine Waschmaschine, ein Tumbler oder ein Geschirrspüler, oder ein Teil eines solchen Artikels sein. Der Artikel ist vorzugsweise ein Fahrzeug oder ein Anbauteil eines Fahrzeugs.

Ein weiterer Aspekt der Erfindung betrifft die Verwendung des erfindungsgemäßen einkomponentigen hitzehärtenden Epoxidharzklebstoffs wie vorstehend beschrieben zur wärmebeständigen Verklebung von Substraten, insbesondere Metallsubstraten, bevorzugt Metallsubstraten aus Stahl mit einem Zink-Magnesium Überzug, feuerverzinktem Stahl mit einer Zinksulfat und/oder Zinkhydroxysulfat umfassenden Beschichtung, kaltgewalztem Stahl, Aluminium, Aluminiumlegierung oder einem Metall, insbesondere Stahl, mit einem Überzug aus Aluminium oder einer Aluminiumlegierung.

Im Folgenden wird die Erfindung durch Beispiele weiter erläutert, die die Erfindung aber in keiner Weise einschränken sollen.

### Beispiele

In den Beispielen wurden für die Prüfung der jeweiligen Eigenschaften folgende Prüfmethoden verwendet.

### Viskosität

Die Viskosität wurde oszillographisch mittels eines Rheometers mit beheizbarer Platte (MCR 301, AntonPaar) gemessen (Spalt 1000 µm, Mess-Plattendurchmesser: 25 mm (Platte/Platte), Deformation 0,01 bei 5 Hz, Temperatur: 20°C-70°C, Aufheizrate 10°C/min).

### Winkelschälversuch (T-Peel)

Die Bestimmung ist an der Norm ISO 11339 orientiert. Die Winkelschälfestigkeit wurde mit folgender Anordnung (Dimensionen in mm) bestimmt.

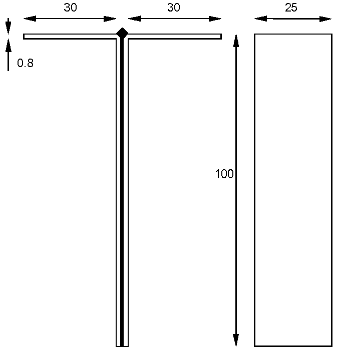

Substrat entfettet mit Heptan und rückbeölt mit 3 g/m2 Anticorit PL 3802-39S (Fa. Fuchs Schmierstoffe).
Klebschichtdicke: 0,2 mm, Abstandhalter: Glaskugeln
Einbrand: 25 min bei 180°C
Prüfgeschwindigkeit: 100 mm/min

### Kohäsionsbruch/Adhäsionsbruch

Optische Beurteilung des aus dem Winkelschälversuch erhaltenen Bruchbildes, unterteilt in CF und AF. CF = Kohäsionsbruch (z.B. 100 CF= 100% Kohäsionsbruch), AF= Adhäsionsbruch (z.B. 100 AF= 100% Adhäsionsbruch).

### Beispiele Prüfung Carbonsäuren (Stahl 18 - Stahl 77)

Als Basisformulierung wurde eine Formulierung für einen kommerziellen einkomponentigen Epoxidharzklebstoff (SikaPower®-493, von Sika Schweiz AG) verwendet, der jeweils eine Carbonsäure in einem bestimmten Anteil wie in nachstehender Tabelle 1 angeführt zugesetzt wurde (Angaben in Gew.-% und mmol Säure/100 g Klebstoff). In SikaPower®-493 sind ein Epoxidharz gemäß der vorstehend erläuterten Formel (XI), ein endständig blockiertes Polyurethanprepolymer gemäß der vorstehend erläuterten Formel (I) als Schlagzähmodifikator und Dicyandiamid als Härter enthalten. Als Referenz wurde SikaPower®-493 ohne Zugabe von Carbonsäure getestet (Stahl 1). Als Substrat für die Haftprüfung wurde Substrat ZM (Stahl mit Zink-Magnesium Überzug) von ArcelorMittal eingesetzt. Die Beispiele der erhaltenen Klebstoffe wurden mit Stahl 1, Stahl 18 usw. bezeichnet. Der Winkelschälversuch wurde wie oben beschrieben bei einer Temperatur von 80°C bestimmt. Die Ergebnisse sind ebenfalls in Tabelle 1 angeführt. Ausgehärtete Zusammensetzungen, welche Blasenbildung aufweisen, sind dahingehend nachteilig, da dies zu einer Verringerung der mechanischen Eigenschaften, insbesondere in Bezug auf Zugfestigkeit und Zugscherfestigkeit, und auch zu einer Herabsetzung der Schlagzähigkeit führt. Zur Herstellung der Klebstoffe wurden die Komponenten wie folgt gemischt.

### Mischung (Stahl 18 - Stahl 42)

Die Formulierungen wurden auf Basis von 50 g SikaPower®-493 in einem Speedmixer (Fa. Hauschild) mit folgender Prozedur gemischt:

| | |
|---|---|
| 1x Programm 1: | 1 min, ansteigend bis auf 1900 Upm, ohne Vakuum und |
| 2x Programm 2: | 1,5 min, ansteigend bis auf 1900 Upm, unter Vakuum, dazwischen Homogenisieren mit Holzspatel. |

### Beispiele (Stahl 44 - 77)

Die Formulierungen (400 g) wurden auf einem Laborplanetenmischer (Schramoid) gemischt.

**Tabelle 1**

| | **Gew.-% Carbonsäure** | **mmol*** | **T-Peel** | **Bruchbild** | **Beobachtungen** | **Bewertung** |
|---|---|---|---|---|---|---|
| Stahl 1 | ohne Säure (Referenz) | - | 3,0 N/mm | 100AF | | Referenz |
| Stahl 18 | 1,5% Bernsteinsäure | 12,7 | 5,1 N/mm | 90CF/10AF | | positiv |
| Stahl 19 | 1,0% Bernsteinsäure | 8,5 | 4,0 N/mm | 40CF/60AF | | positiv |
| Stahl 20 | 1,5% Adipinsäure | 10,3 | 4,7 N/mm | 80CF/20AF | | positiv |
| Stahl 21 | 1,5% Oxalsäuredihydrat | 11,9 | 3,7 N/mm | 100CF | Blasen | negativ, Zersetzung |
| Stahl 22 | 1,5% Benzoesäure | 12,3 | 4,0 N/mm | 5CF/95AF | | negativ, geringer Effekt |
| Stahl 23 | 1,5% Malonsäure | 14,4 | 5,0 N/mm | 100CF | Blasen, braune Verbrennungen | negativ, Zersetzung |
| Stahl 24 | 1,5% Azelainsäure | 8,0 | 4,0 N/mm | 100AF | | negativ, kein Effekt |
| Stahl 25 | 1,5% Salicylsäure | 10,9 | 3,9 N/mm | 5CF/95AF | | negativ, geringer Effekt |
| Stahl 26 | 1,5% Epoxybernsteinsäure | 11,4 | 4,4 N/mm | 10CF/90AF | Farbänderung von Blau nach Grün, braune Verbrennungen | Verbrennungen |
| Stahl 27 | 1,5% Maleinsäure | 12,9 | 4,0 N/mm | 5CF/95AF | Farbänderung von Blau nach Grün, braune Verbrennungen | negativ, Verbrennungen |
| Stahl 28 | 1,5% Sebacinsäure | 7,4 | 4,5 N/mm | 5CF/95AF | | negativ, geringer Effekt |
| Stahl 29 | 1,5% Citronensäuremonohydrat | 7,1 | 4,5 N/mm | 100CF | Blasen, Farbänderung von Blau nach Grün, braune Verbrennungen | negativ, Zersetzung |
| Stahl 30 | 1,5% Stearinsäure | 5,3 | 3,2 N/mm | 100AF | | negativ, kein Effekt |
| Stahl 31 | 1,5% 2-Hydroxybernsteinsäure | 11,2 | 3,5 N/mm | 100AF | Braune Verbrennungen | negativ, Verbrennungen |
| Stahl 32 | 1,5% Laurinsäure | 7,5 | 4,0 N/mm | 10CF/90AF | | negativ, geringer Effekt |
| Stahl 33 | 1,5% Bernsteinsäureanhydrid | 15,0 | 3,8 N/mm | 10CF/90AF | Braune Verbrennungen | negativ, geringer Effekt |
| Stahl 35 | 1,0% Oxalsäuredihydrat | 7,9 | 4,1 N/mm | 100CF | Blasen, braune Verbrennungen (weniger) | negativ, Zersetzung |
| Stahl 36 | 0,5% Oxalsäuredihydrat | 4,0 | 4,8 N/mm | 80CF/20AF | Blasen | negativ, Zersetzung |
| Stahl 37 | 1,0% Malonsäure | 9,6 | 4,5 N/mm | 30CF/70AF | Blasen, braune Verbrennungen (weniger) | negativ, Zersetzung |
| Stahl 38 | 0,5% Malonsäure | 4,8 | 4,3 N/mm | 10CF/90AF | | negativ, geringer Effekt |
| Stahl 39 | 1,0% Citronensäuremonohydrat | 4,8 | 5,2 N/mm | 100CF | Blasen, Farbänderung von Blau nach Grün, braune Verbrennungen (weniger) | negativ, Zersetzung |
| Stahl 40 | 0,5% Citronensäuremonohydrat | 2,4 | 4,7 N/mm | 60CF/40AF | Farbänderung von Blau nach Grün, braune Verbrennungen (weniger) | negativ, Zersetzung |
| Stahl 42 | 1,0% Epoxybernsteinsäure | 7,6 | 5,0 N/mm | 60CF/40AF | Farbänderung von Blau nach Grün, braune Verbrennungen (weniger) | Verbrennungen |
| Stahl 44 | 1,0% Bernsteinsäure | 8,5 | 5,5 N/mm | 90CF/10AF | | positiv, guter Effekt |
| Stahl 45 | 1,0% Malonsäure | 9,6 | 4,8 N/mm | 100CF | Blasen, braune Verbrennungen | negativ, Zersetzung |
| Stahl 46 | 0,75% Epoxybernsteinsäure | 5,7 | 4,6 N/mm | 100CF | Farbänderung von Blau nach Grün, braune Verbrennungen (weniger) | Verbrennungen |
| Stahl 47 | 0,5% Malonsäure | 4,8 | 5,2 N/mm | 100CF | Blasen | negativ, Zersetzung |
| Stahl 48 | 0,25% Malonsäure | 2,4 | 5,0 N/mm | 90CF/10AF | Blasen (weniger) | negativ, Zersetzung |
| Stahl 49 | 0,4% Epoxybernsteinsäure | 3,0 | 4,6 N/mm | 80CF/20AF | Farbänderung von Blau nach Grün, braune Verbrennungen (weniger) | Verbrennungen |
| Stahl 50 | 0,5% Bernsteinsäure | 4,2 | 5,1 N/mm | 90CF/10AF | | positiv, guter Effekt |
| Stahl 51 | 0,1% Malonsäure | 1,0 | 3,9 N/mm | 100AF | | negativ, kein Effekt |
| Stahl 52 | 1,0% EDTA** | 3,4 | 4,2 N/mm | 5CF/95AF | | negativ, kein Effekt |
| Stahl 53 | 0,5% EDTA** | 1,7 | 3,4 N/mm | 100AF | | negativ, kein Effekt |
| Stahl 54 | 0,25% EDTA** | 0,9 | 3,4 N/mm | 100AF | | negativ, kein Effekt |
| Stahl 55 | 0,5% Trimellitsäure | 2,4 | 4,2 N/mm | 75CF/25AF | | positiv, guter Effekt |
| Stahl 56 | 0,25% Trimellitsäure | 1,2 | 3,8 N/mm | 100AF | | |
| Stahl 57 | 1,2% Trimellitsäure | 5,7 | 4,8 N/mm | 95CF/5AF | | positiv, guter Effekt |
| Stahl 58 | 1,5% Phthalsäure | 9,0 | 5,1 N/mm | 90CF/10AF | | positiv, guter Effekt |
| Stahl 59 | 1,5% Terephthalsäure | 9,0 | 4,4 N/mm | 75CF/25AF | | positiv, guter Effekt |
| Stahl 60 | 1,5% Isophthalsäure | 9,0 | 5,2 N/mm | 90CF/10AF | | positiv, guter Effekt |
| Stahl 63 | 1,0% Isophthalsäure | 6,0 | 4,5 N/mm | 40CF/60AF | | positiv, guter Effekt |
| Stahl 64 | 0,5% Isophthalsäure | 3,0 | 3,8 N/mm | 95CF/5AF | | positiv, guter Effekt |
| Stahl 72 | 1,5% Oxalsäure (wasserfrei) | 16,7 | 3,3 N/mm | 100CF | Blasen, braune Verbrennungen (wenig) | negativ, Zersetzung |
| Stahl 73 | 1,5% Korksäure | 8,6 | 4,8 N/mm | 20CF/80AF | | negativ, geringer Effekt |
| Stahl 74 | 1,5% D-Weinsäure | 10.0 | 4.2 N/mm | 100AF | Braune Verbrennungen | negativ, Verbrennungen |
| Stahl 75 | 1,5% DL-Weinsäure | 10.0 | 4.1 N/mm | 100AF | Braune Verbrennungen | negativ, Verbrennungen |
| Stahl 76 | 1,5% 2-Nitrobenzoesäure | 9.0 | 5.3 N/mm | 100CF | | positiv, guter Effekt |
| Stahl 77 | 1,5% Gallussäure | 9.0 | 4.3 N/mm | 20CF/80AF | Blasen, braune Verbrennungen | negativ, Zersetzung, Verbrennung |

| | | | | | | |
|---|---|---|---|---|---|---|
| * mmol Carbonsäure pro 100 g Klebstoff **Ethylendiamintetraessigsäure | | | | | | |

### Beispiele Lagerstabilität

Zur Prüfung des Einflusses der Menge an Carbonsäure auf die Lagerstabilität wurde der vorstehend eingesetzte handelsübliche einkomponentige hitzehärtende Epoxidharzklebstoff (SikaPower®-493) mit verschiedenen Mengen an Bernsteinsäure bzw. Isophthalsäure vermischt. Der jeweilige Mengenanteil der Carbonsäure in den erhaltenen Epoxidharzklebstoffen ist in Gew.-% bzw. in mmol pro 100 g Epoxidharzklebstoff in nachstehender Tabelle 2 angeführt. Als Referenz (Stahl 1) wurde der handelsübliche Epoxidharzklebstoff ohne Zusatz von Carbonsäure getestet.

Zur Prüfung der Lagerstabilität wurde die Viskosität des erhaltenen Klebstoffs bei 25 °C und bei 50 °C bestimmt. Die Viskositätsmessung erfolgte zum einen unmittelbar nach der Mischung mit der Carbonsäure und zum anderen nach einer Lagerung bei 60 °C für 7 Tage. Die Ergebnisse sind ebenfalls in nachstehender Tabelle 2 aufgeführt.

**Tabelle 2**

| | Stahl 1 | Stahl 50 | Stahl 69 | Stahl 70 | Stahl 71 | Stahl 64 | Stahl 60 | Stahl 67 | Stahl 68 |
|---|---|---|---|---|---|---|---|---|---|
| Bernsteinsäure | | | | | | | | | |
| [Gew.-%] | - | 0,5 | 1,5 | 5 | 10 | - | - | - | - |
| [mmol]* | - | 4,2 | 12,7 | 42,3 | 84,7 | - | - | - | - |

| Isophthalsäure | | | | | | | | | |
|---|---|---|---|---|---|---|---|---|---|
| [Gew.-%] | - | - | - | - | - | 0,5 | 1,5 | 5 | 10 |
| [mmol]* | - | - | - | - | - | 3,0 | 9,0 | 30,1 | 60,2 |
| | | | | | | | | | |

| Viskosität bei | | | | | | | | | |
|---|---|---|---|---|---|---|---|---|---|
| 25°C *[Pas]* | 1650 | 1700 | 1740 | 1750 | 2130 | 1690 | 1770 | 1870 | 1930 |
| nach 7d bei 60°C | 1920 | 2770 | 9280 | gehärtet | gehärtet | 2580 | 5020 | gehärtet | gehärtet |
| Anstieg [%] | 16 | 63 | 433 | - | - | 53 | 184 | - | - |

| Viskosität bei | | | | | | | | | |
|---|---|---|---|---|---|---|---|---|---|
| 50°C [*Pas]* | 639 | 662 | 655 | 639 | 791 | 681 | 698 | 713 | 685 |
| nach 7d bei 60°C | 675 | 731 | 1760 | gehärtet | gehärtet | 764 | 992 | gehärtet | gehärtet |
| Anstieg [%] | 6 | 10 | 169 | - | - | 12 | 42 | - | - |

| | | | | | | | | | |
|---|---|---|---|---|---|---|---|---|---|
| * mmol Carbonsäure pro 100 g Klebstoff | | | | | | | | | |

### Beispiele Haftung

### Stahl 1

Als Referenz wurde der vorstehend verwendete handelsübliche einkomponentige hitzehärtende Epoxidharzklebstoff (SikaPower®-493) verwendet.

### Stahl 60

Es wurde ein einkomponentiger hitzehärtender Epoxidharzklebstoff hergestellt, indem dem Klebstoff Stahl 1 Isophthalsäure zugesetzt wurde, um einen Epoxidharzklebstoff mit 1,5 Gew.-% Isophthalsäure bzw. 9,0 mmol pro 100 g Klebstoff zu erhalten.

Die Epoxidharzklebstoffe Stahl 1 und Stahl 60 wurden auf folgenden Stahlblechen bzw. Aluminiumblechen getestet.

| | | |
|---|---|---|
| DC04 | DC04+ZE 75/75 AO 0,8 mm | elektrolytisch verzinktes Stahlblech |
| DC06 | DC06+ZE 75/75 APO 0,8mm | elektrolytisch verzinktes und phosphatiertes Stahlblech |
| DX56D | DX56D+Z100 MBO 0,8 mm | feuerverzinktes Stahlblech |
| ZM | DX54+ZM120, 0,75 mm | Stahlblech mit Zink-Magnesium Überzug |
| NIT | NIT, ArcelorMittal, 0,8 mm | Verzinktes Stahlblech behandelt nach NIT-Verfahren (Zinksulfat/Zinkhydroxysulfat-Beschichtung) |
| CRS | CRS, 1,2 mm | Kaltgewalzter Stahl, nicht verzinkt |
| AC170 | AC 170 (AA6016 + TiZr), 1,0 mm | Aluminum mit Konversionsschicht |

Alle Substrate wurden vorgängig mit Heptan entfettet und mit 3 g/m² Öl (Anticorit PL 3809-39S) beölt.

Die Klebstoffe Stahl 1 und Stahl 60 wurden jeweils auf die vorbehandelten Substrate appliziert, mit Glaskugeln (0,2 mm) versehen, gefügt und anschließend für 25 min bei 180°C ausgehärtet.

Die Haftung der Klebstoffe auf den Substraten wurde anschließend bei Temperaturen von 23°C und 80 °C mittels Winkelschälversuch (T-Peel) bei einer Geschwindigkeit von 100 mm/min und Bestimmung des Bruchbildes bewertet. Die Ergebnisse sind in den beiden nachstehenden Tabellen 3 und 4 gezeigt. In den Tabellen bedeuten:
CF = Kohäsionsbruch (100 CF= 100% Kohäsionsbruch)
AF= Adhäsionsbruch (100 AF= 100% Adhäsionsbruch)
Verlust [%]: Verringerung des T-Peel bei 80 °C im Vergleich zum T-Peel bei 23 °C in Prozent.

Die Ergebnisse zeigen auf allen Substraten eine geringere Verringerung des T-Peels bei 80 °C im Vergleich zum T-Peels bei 23 °C bei Stahl 60 im Vergleich zu Stahl 1.

Auf den Substraten ZM, NIT und CRS ist die Haftung von Stahl 60 besser als die von Stahl 1. Insbesondere ist die Haftung von Stahl 60 auf ZM bei 80 °C gut, während mit Stahl 1 keine ausreichende Haftung erreicht wird.

**Tabelle 3. Bestimmung bei 23 °C**

| | **DC04** | **DC06** | **DX56D** | **ZM** | **NIT** | **AC170** | **CRS** |
|---|---|---|---|---|---|---|---|
| **Stahl 1** | | | | | | | |
| *Winkelschälfestigkeit [N*/*mm]* | 6,6 +/-0,1 | 7,4 +/-0,6 | 8,4 +/-0,4 | 7,0 +/-0,2 | 7,7 +/-0,1 | 6,1 +/-0,3 | 13,1 +/-0,5 |
| Bruchbild | 100CF | 100CF | 100CF | 100CF | 100CF | 100CF | 100CF |

| **Stahl 60** | | | | | | | |
|---|---|---|---|---|---|---|---|
| *Winkelschälfestigkeit [N*/*mm]* | 6,2 +/-0,2 | 5,9 +/-0,4 | 6,6 +/-0,2 | 6,0 +/-0,1 | 6,9 +/-0,6 | 4,8 +/-0,4 | 12,5 +/-0,7 |
| Bruchbild | 100CF | 100CF | 100CF | 100CF | 100CF | 100CF | 100CF |

**Tabelle 4. Bestimmung bei 80 °C**

| | **DC04** | **DC06** | **DX56D** | **ZM** | **NIT** | **AC170** | **CRS** |
|---|---|---|---|---|---|---|---|
| **Steel 1** | | | | | | | |
| *Winkelschälfestigkeit [N*/*mm]* | 5,7 +/-0,1 | 5,7 +/-0,2 | 6,4 +/-0,2 | 3,0 +/-0,2 | 5,3 +/-0,1 | 5,5 +/-0,1 | 9,5 +/-0,7 |
| Verlust [%] | 14 | 23 | 24 | 59 | 31 | 10 | 27 |
| Bruchbild | 100CF | 100CF | 100CF | 100AF | 100CF | 100CF | 50CF/50AF |

| **Steel 60** | | | | | | | |
|---|---|---|---|---|---|---|---|
| *Winkelschälfestigkeit [N*/*mm]* | 5,8 +/-0,2 | 5,2 +/-0,2 | 5,8 +/-0,2 | 5,2 +/-0,2 | 6,1 +/-0,2 | 5,3 +/-0,3 | 10,7 +/-0,1 |
| Verlust [%] | 6 | 12 | 12 | 30 | 12 | -15 | 14 |
| Bruchbild | 100CF | 100CF | 100CF | 20CF/80AF | 100CF | 100CF | 90CF/10AF |

## Patentansprüche

1. Einkomponentiger hitzehärtender Epoxidharzklebstoff, umfassend
a) mindestens ein Epoxidharz mit durchschnittlich mehr als einer Epoxidgruppe pro Molekül;
b) mindestens einen latenten Härter für Epoxidharze; und
c) mindestens eine Carbonsäure ausgewählt aus substituierter oder unsubstituierter Adipinsäure, substituierter oder unsubstituierter Bernsteinsäure, substituierter oder unsubstituierter Phthalsäure, substituierter oder unsubstituierter Terephthalsäure, substituierter oder unsubstituierter Isophthalsäure, substituierter oder unsubstituierter Benzoltricarbonsäure und substituierter oder unsubstituierter Nitrobenzoesäure, wobei 2-Hydroxybernsteinsäure und 2,3-Dihydroxybernsteinsäure als Carbonsäure ausgeschlossen sind,
wobei der Epoxidharzklebstoff 0,0015 bis 0,04 mol der mindestens einen Carbonsäure pro 100 g Epoxidharzklebstoff enthält und der Epoxidharzklebstoff eine Viskosität von 500 - 5'000 Pas bei 25°C aufweist, wobei die Viskosität oszillographisch bestimmt wird mittels eines Rheometers mit beheizbarer Platte (MCR 301, AntonPaar) (Spalt 1000 µm, Mess-Plattendurchmesser: 25 mm (Platte/Platte), Deformation 0,01 bei 5 Hz, Temperatur: 25°C).

2. Einkomponentiger hitzehärtender Epoxidharzklebstoff nach Anspruch 1, wobei die mindestens eine Carbonsäure ausgewählt ist aus Bernsteinsäure, Phthalsäure, Isophthalsäure, Terephthalsäure, Trimellitsäure und Nitrobenzoesäure, wobei die mindestens eine Carbonsäure bevorzugt ausgewählt ist aus Bernsteinsäure, Phthalsäure, Isophthalsäure und Nitrobenzoesäure, am meisten bevorzugt aus Isophthalsäure und Nitrobenzoesäure.

3. Einkomponentiger hitzehärtender Epoxidharzklebstoff nach Anspruch 1 oder 2, wobei der Epoxidharzklebstoff 0,002 bis 0,03 mol der mindestens einen Carbonsäure pro 100 g Epoxidharzklebstoff enthält.

4. Einkomponentiger hitzehärtender Epoxidharzklebstoff nach irgendeinem der Ansprüche 1 bis 3, wobei der Epoxidharzklebstoff 0,003 bis 0,02 mol der mindestens einen Carbonsäure pro 100 g Epoxidharzklebstoff enthält.

5. Einkomponentiger hitzehärtender Epoxidharzklebstoff nach irgendeinem der Ansprüche 1 bis 4, ferner umfassend mindestens ein endständig blockiertes Polyurethanprepolymer.

6. Einkomponentiger hitzehärtender Epoxidharzklebstoff nach Anspruch 5, wobei das mindestens eine endständig blockierte Polyurethanprepolymer die Formel (I) aufweist; 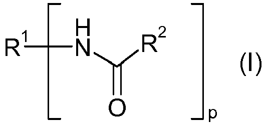
wobei R¹ für einen p-wertigen Rest eines mit Isocyanatgruppen terminierten linearen oder verzweigten Polyurethanprepolymers nach dem Entfernen der endständigen Isocyanatgruppen steht;
p für einen Wert von 2 bis 8 steht; und
R² unabhängig voneinander für einen Substituenten steht, welcher ausgewählt ist aus der Gruppe bestehend aus 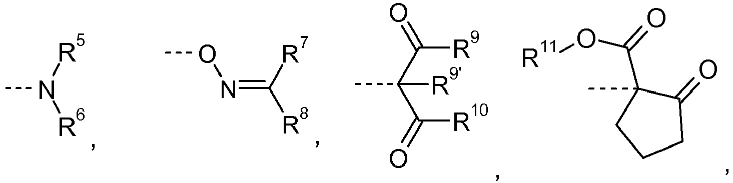 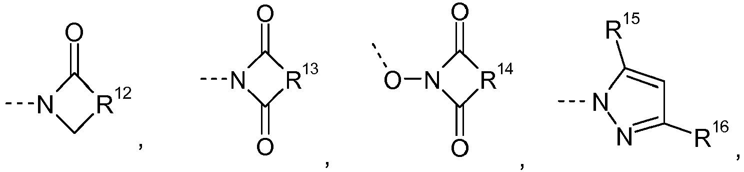 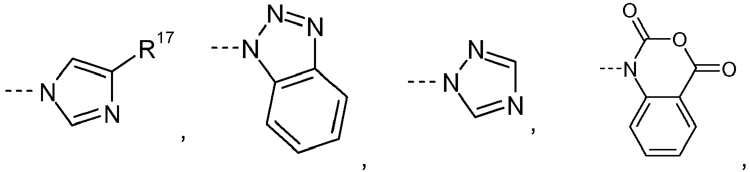 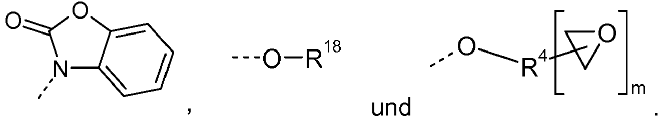
wobei
R⁵, R⁶, R⁷ und R⁸ je unabhängig voneinander für eine Alkyl- oder Cycloalkyl- oder Aralkyl- oder Arylalkyl-Gruppe steht
oder R⁵ zusammen mit R⁶, oder R⁷ zusammen mit R⁸, einen Teil eines 4- bis 7-gliedrigen Rings bilden, welcher gegebenenfalls substituiert ist;
R⁹, R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und R¹⁸ für eine Aralkylgruppe oder für eine ein- oder mehrkernige substituierte oder unsubstituierte Aromatengruppe steht, welche gegebenenfalls aromatische Hydroxylgruppen aufweist;
R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxy- und Epoxidgruppen steht;
und m für einen Wert von 1, 2 oder 3 steht.

7. Einkomponentiger hitzehärtender Epoxidharzklebstoff nach irgendeinem der Ansprüche 1 bis 6, ferner umfassend mindestens einen Füllstoff.

8. Einkomponentiger hitzehärtender Epoxidharzklebstoff nach irgendeinem der Ansprüche 1 bis 7, ferner umfassend mindestens einen Flüssigkautschuk und/oder mindestens einen Zähigkeitsverbesserer.

9. Einkomponentiger hitzehärtender Epoxidharzklebstoff nach irgendeinem der Ansprüche 1 bis 8, wobei der Epoxidharzklebstoff eine Viskosität zwischen 1000 Pas und 3000 Pas bei 25°C, insbesondere zwischen 1100 und 2800 bei 25°C aufweist.

10. Einkomponentiger hitzehärtender Epoxidharzklebstoff nach irgendeinem der Ansprüche 1 bis 9, wobei der latente Härter ausgewählt ist aus Dicyandiamid, Guanaminen, Guanidinen, Aminoguanidinen und deren Derivaten, substituierten Harnstoffen, Imidazolen und Amin-Komplexen, wobei Dicyandiamid bevorzugt ist.

11. Verfahren zur Verklebung von Substraten, insbesondere Metallsubstraten, umfassend die Schritte
a) Applikation eines einkomponentigen hitzehärtenden Epoxidharzklebstoffs nach irgendeinem der Ansprüche 1 bis 10 auf ein erstes Substrat, insbesondere ein erstes Metallsubstrat;
b) Kontaktieren des applizierten Epoxidharzklebstoffs mit einem zweiten Substrat, insbesondere einem zweiten Metallsubstrat, unter Bildung eines Klebverbunds; und
c) Aushärten des Epoxidharzklebstoffs im Klebverbund bei einer Temperatur im Bereich von 100 bis 220 °C.

12. Verfahren nach Anspruch 11, wobei das erste Metallsubstrat und/oder das zweite Metallsubstrat ausgewählt sind aus Stahl mit einem Zink-Magnesium Überzug, feuerverzinktem Stahl mit einer Zinksulfat und/oder Zinkhydroxysulfat umfassenden Beschichtung, kaltgewalztem Stahl, Magnesium, Aluminium, Aluminiumlegierung, Metallsubstraten mit einer Umformhilfe als Beschichtung oder einem Metall, insbesondere Stahl, mit einem Überzug aus Aluminium oder einer Aluminiumlegierung, wobei das erste Metallsubstrat und/oder das zweite Metallsubstrat bevorzugt aus Stahl mit einem Zink-Magnesium Überzug, feuerverzinktem Stahl mit einer Zinksulfat und/oder Zinkhydroxysulfat umfassenden Beschichtung oder kaltgewalztem Stahl ohne Zinküberzug sind.

13. Verfahren nach Anspruch 11 oder 12, wobei das erste Metallsubstrat und/oder das zweite Metallsubstrat aus Stahl mit einem Zink-Magnesium Überzug sind.

14. Artikel, umfassend einen gehärteten Klebverbund, wobei der Klebverbund nach einem Verfahren nach irgendeinem der Ansprüche 11 bis 13 erhältlich ist.

15. Verwendung eines einkomponentigen hitzehärtenden Epoxidharzklebstoffs nach irgendeinem der Ansprüche 1 bis 10 zur wärmebeständigen Verklebung von Substraten, insbesondere Metallsubstraten, bevorzugt Metallsubstraten aus Stahl mit einem Zink-Magnesium Überzug, feuerverzinktem Stahl mit einer Zinksulfat und/oder Zinkhydroxysulfat umfassenden Beschichtung, kaltgewalztem Stahl, Magnesium, Aluminium, Aluminiumlegierung, Metallsubstraten mit einer Umformhilfe als Beschichtung oder einem Metall, insbesondere Stahl, mit einem Überzug aus Aluminium oder einer Aluminiumlegierung.

## Claims

1. One-component heat-curing epoxy resin adhesive comprising
a) at least one epoxy resin having an average of more than one epoxy group per molecule;
b) at least one latent hardener for epoxy resins; and
c) at least one carboxylic acid selected from substituted or unsubstituted adipic acid, substituted or unsubstituted succinic acid, substituted or unsubstituted phthalic acid, substituted or unsubstituted terephthalic acid, substituted or unsubstituted isophthalic acid, substituted or unsubstituted benzenetricarboxylic acid and substituted or unsubstituted nitrobenzoic acid, excluding 2-hydroxysuccinic acid and 2,3-dihydroxysuccinic acid as carboxylic acid,
wherein the epoxy resin adhesive contains 0.0015 to 0.04 mol of the at least one carboxylic acid per 100 g of the epoxy resin adhesive and the epoxy resin adhesive has a viscosity of 500-5000 Pas at 25°C, wherein the viscosity is determined by oscillographic means using a rheometer having a heatable plate (MCR 301, AntonPaar) (1000 µm gap, measurement plate diameter: 25 mm (plate/plate), deformation 0.01 at 5 Hz, temperature: 25°C).

2. One-component heat-curing epoxy resin adhesive according to Claim 1, wherein the at least one carboxylic acid is selected from succinic acid, phthalic acid, isophthalic acid, terephthalic acid, trimellitic acid and nitrobenzoic acid, wherein the at least one carboxylic acid is preferably selected from succinic acid, phthalic acid, isophthalic acid and nitrobenzoic acid, most preferably from isophthalic acid and nitrobenzoic acid.

3. One-component heat-curing epoxy resin adhesive according to Claim 1 or 2, wherein the epoxy resin adhesive contains 0.002 to 0.03 mol of the at least one carboxylic acid per 100 g of the epoxy resin adhesive.

4. One-component heat-curing epoxy resin adhesive according to any of Claims 1 to 3, wherein the epoxy resin adhesive contains 0.003 to 0.02 mol of the at least one carboxylic acid per 100 g of the epoxy resin adhesive.

5. One-component heat-curing epoxy resin adhesive according to any of Claims 1 to 4, further comprising at least one terminally blocked polyurethane prepolymer.

6. One-component heat-curing epoxy resin adhesive according to Claim 5, wherein the at least one terminally blocked polyurethane prepolymer has the formula (I); 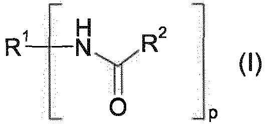
where R¹ is a p-valent radical of a linear or branched polyurethane prepolymer terminated by isocyanate groups after the removal of the terminal isocyanate groups;
p is a value from 2 to 8; and
R² is independently a substituent selected from the group consisting of 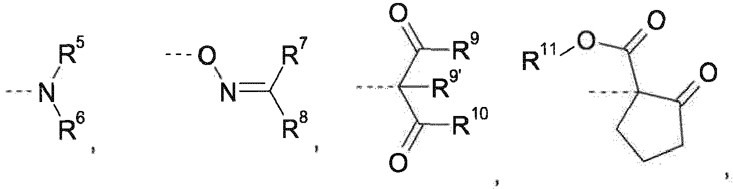 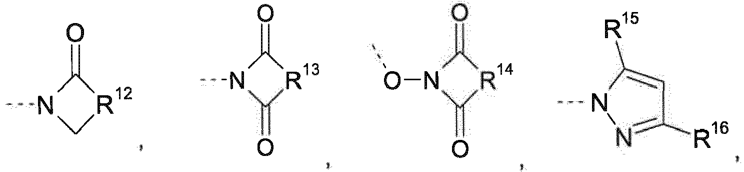 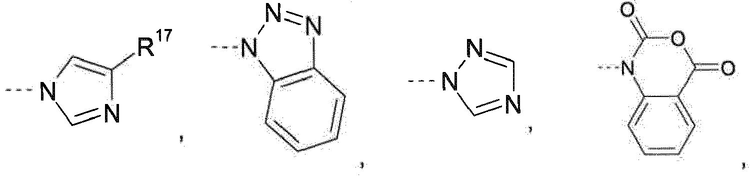 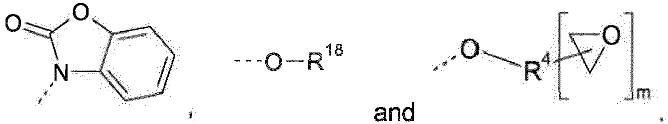
where
R⁵, R⁶, R⁷ and R⁸ are each independently an alkyl or cycloalkyl or aralkyl or arylalkyl group
or R⁵ together with R⁶, or R⁷ together with R⁸, form part of a 4- to 7-membered ring which is optionally substituted;
R⁹, R^{9'} and R¹⁰ are each independently an alkyl or aralkyl or arylalkyl group or an alkyloxy or aryloxy or aralkyloxy group;
R¹¹ is an alkyl group,
R¹², R¹³ and R¹⁴ are each independently an alkylene group having 2 to 5 carbon atoms, which optionally has double bonds or is substituted, or a phenylene group or a hydrogenated phenylene group;
R¹⁵, R¹⁶ and R¹⁷ are each independently H or an alkyl group or an aryl group or an aralkyl group; and
R¹⁸ is an aralkyl group or a mono- or polycyclic substituted or unsubstituted aromatic group optionally having aromatic hydroxyl groups;
R⁴ is a radical of an aliphatic, cycloaliphatic, aromatic or araliphatic epoxide containing a primary or secondary hydroxyl group after the removal of the hydroxyl and epoxy groups;
and m is a value of 1, 2 or 3.

7. One-component heat-curing epoxy resin adhesive according to any of Claims 1 to 6, further comprising at least one filler.

8. One-component heat-curing epoxy resin adhesive according to any of Claims 1 to 7, further comprising at least one liquid rubber and/or at least one toughness improver.

9. One-component heat-curing epoxy resin adhesive according to any of Claims 1 to 8, wherein the epoxy resin adhesive has a viscosity between 1000 Pas and 3000 Pas at 25°C, especially between 1100 and 2800 at 25°C.

10. One-component heat-curing epoxy resin adhesive according to any of Claims 1 to 9, wherein the latent hardener is selected from dicyandiamide, guanamines, guanidines, aminoguanidines and derivatives thereof, substituted ureas, imidazoles and amine complexes, preference being given to dicyandiamide.

11. Method of bonding substrates, especially metal substrates, comprising the steps of
a) applying a one-component heat-curing epoxy resin adhesive according to any of Claims 1 to 10 to a first substrate, especially a first metal substrate;
b) contacting the epoxy resin adhesive applied with a second substrate, especially a second metal substrate, to form an adhesive bond; and
c) curing the epoxy resin adhesive in the adhesive bond at a temperature in the range from 100 to 220°C.

12. Method according to Claim 11, wherein the first metal substrate and/or the second metal substrate is selected from steel having a zinc-magnesium coating, hot-dip galvanized steel having a coating comprising zinc sulphate and/or zinc hydroxysulphate, cold-rolled steel, magnesium, aluminium, aluminium alloy, metal substrates having a forming aid as coating or a metal, especially steel, having a coating of aluminium or an aluminium alloy, wherein the first metal substrate and/or the second metal substrate are preferably composed of steel having a zinc-magnesium coating, hot-dip galvanized steel having a coating comprising zinc sulphate and/or zinc hydroxysulphate or cold-rolled steel without a zinc coating.

13. Method according to Claim 11 or 12, wherein the first metal substrate and/or the second metal substrate is composed of steel having a zinc-magnesium coating.

14. Article comprising a cured adhesive bond, wherein the adhesive bond is obtainable by a method according to any of Claims 11 to 13.

15. Use of a one-component heat-curing epoxy resin adhesive according to any of Claims 1 to 10 for heat-resistant bonding of substrates, especially metal substrates, preferably metal substrates composed of steel having a zinc-magnesium coating, hot-dip galvanized steel having a coating comprising zinc sulphate and/or zinc hydroxysulphate, cold-rolled steel, magnesium, aluminium, aluminium alloy, metal substrates having a forming aid as coating or a metal, especially steel, having a coating of aluminium or an aluminium alloy.

## Revendications

1. Adhésif à base de résine époxyde monocomposant thermodurcissable, comprenant :
a) au moins une résine époxyde contenant en moyenne plus d'un groupe époxyde par molécule ;
b) au moins un agent de durcissement latent pour résines époxydes ; et
c) au moins un acide carboxylique choisi parmi l'acide adipique substitué ou non substitué, l'acide succinique substitué ou non substitué, l'acide phtalique substitué ou non substitué, l'acide téréphtalique substitué ou non substitué, l'acide isophtalique substitué ou non substitué, l'acide benzènetricarboxylique substitué ou non substitué, et l'acide nitrobenzoïque substitué ou non substitué, l'acide 2-hydroxysuccinique et l'acide 2,3-dihydroxysuccinique étant exclus en tant qu'acide carboxylique,
l'adhésif à base de résine époxyde contenant 0,0015 à 0,04 mole dudit au moins un acide carboxylique pour 100 g d'adhésif à base de résine époxyde, et l'adhésif à base de résine époxyde présentant une viscosité de 500 à 5 000 Pas à 25 °C, la viscosité étant déterminée par oscillographie au moyen d'un rhéomètre à plaque chauffante (MCR 301, AntonPaar) (fente 1 000 µm, diamètre des plaques de mesure : 25 mm (plaque/plaque), déformation 0,01 à 5 Hz, température : 25 °C).

2. Adhésif à base de résine époxyde monocomposant thermodurcissable selon la revendication 1, dans lequel ledit au moins un acide carboxylique est choisi parmi l'acide succinique, l'acide phtalique, l'acide isophtalique, l'acide téréphtalique, l'acide triméllitique et l'acide nitrobenzoïque, ledit au moins un acide carboxylique étant de préférence choisi parmi l'acide succinique, l'acide phtalique, l'acide isophtalique et l'acide nitrobenzoïque, de manière préférée entre toutes parmi l'acide isophtalique et l'acide nitrobenzoïque.

3. Adhésif à base de résine époxyde monocomposant thermodurcissable selon la revendication 1 ou 2, dans lequel l'adhésif à base de résine époxyde contient 0,002 à 0,03 mole dudit au moins un acide carboxylique pour 100 g d'adhésif à base de résine époxyde.

4. Adhésif à base de résine époxyde monocomposant thermodurcissable selon l'une quelconque des revendications 1 à 3, dans lequel l'adhésif à base de résine époxyde contient 0,003 à 0,02 mole dudit au moins un acide carboxylique pour 100 g de l'adhésif à base de résine époxyde.

5. Adhésif à base de résine époxyde monocomposant thermodurcissable selon l'une quelconque des revendications 1 à 4, comprenant en outre au moins un prépolymère de polyuréthane bloqué en position terminale.

6. Adhésif à base de résine époxyde monocomposant thermodurcissable selon la revendication 5, dans lequel ledit au moins un prépolymère de polyuréthane bloqué en position terminale présente la formule (I) : 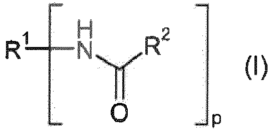
dans laquelle R¹ représente un radical p-valent d'un prépolymère de polyuréthane linéaire ou ramifié terminé avec des groupes isocyanate après l'élimination des groupes isocyanate terminaux ;
p représente une valeur de 2 à 8 ; et
les R² représentent indépendamment les uns des autres un substituant qui est choisi dans le groupe constitué par : 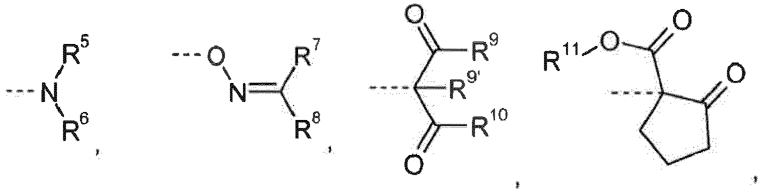 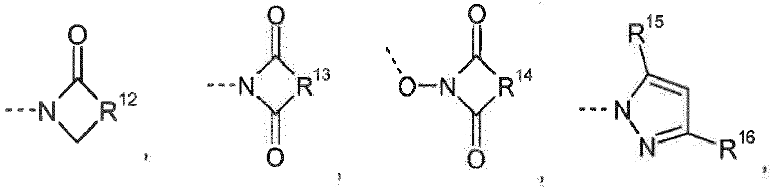 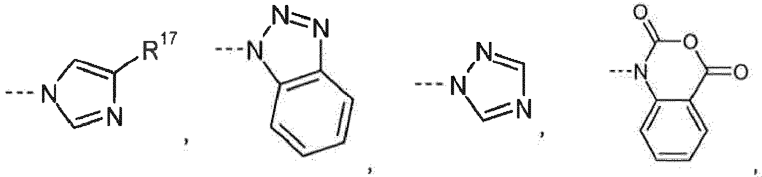 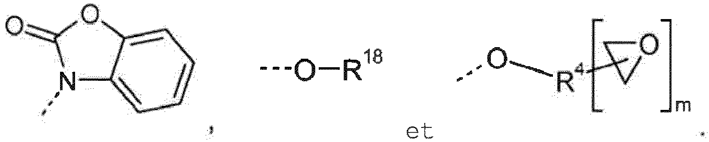
dans lesquels
R⁵, R⁶, R⁷ et R⁸ représentent chacun indépendamment les uns des autres un groupe alkyle ou cycloalkyle ou aralkyle ou arylalkyle,
ou R⁵ forme conjointement avec R⁶, ou R⁷ conjointement avec R⁸, une partie d'un cycle de 4 à 7 chaînons, qui est éventuellement substitué ;
R⁹, R^{9'} et R¹⁰ représentent chacun indépendamment les uns des autres un groupe alkyle ou aralkyle ou arylalkyle ou un groupe alkyloxy ou aryloxy ou aralkyloxy ;
R¹¹ représente un groupe alkyle,
R¹², R¹³ et R¹⁴ représentent chacun indépendamment les uns des autres un groupe alkylène de 2 à 5 atomes C, qui comprend éventuellement des doubles liaisons ou est substitué, ou un groupe phénylène ou un groupe phénylène hydrogéné ;
R¹⁵, R¹⁶ et R¹⁷ représentent chacun indépendamment les uns des autres H ou un groupe alkyle ou un groupe aryle ou un groupe aralkyle ; et
R¹⁸ représente un groupe aralkyle ou un groupe aromatique mono- ou polynucléaire substitué ou non substitué, qui comprend éventuellement des groupes hydroxyle aromatiques ;
R⁴ représente un radical d'un époxyde aliphatique, cycloalipatique, aromatique ou araliphatique contenant un groupe hydroxyle primaire ou secondaire après l'élimination des groupes hydroxy ou époxyde ;
et m représente une valeur de 1, 2 ou 3.

7. Adhésif à base de résine époxyde monocomposant thermodurcissable selon l'une quelconque des revendications 1 à 6, comprenant en outre au moins une charge.

8. Adhésif à base de résine époxyde monocomposant thermodurcissable selon l'une quelconque des revendications 1 à 7, comprenant en outre au moins un caoutchouc liquide et/ou au moins un agent d'amélioration de la résistance.

9. Adhésif à base de résine époxyde monocomposant thermodurcissable selon l'une quelconque des revendications 1 à 8, dans lequel l'adhésif à base de résine époxyde présente une viscosité comprise entre 1 000 Pas et 3 000 Pas à 25 °C, notamment comprise entre 1 100 et 2 800 à 25 °C.

10. Adhésif à base de résine époxyde monocomposant thermodurcissable selon l'une quelconque des revendications 1 à 9, dans lequel l'agent de durcissement latent est choisi parmi le dicyandiamide, les guanamines, les guanidines, les aminoguanidines et leurs dérivés, les urées substituées, les imidazoles et les complexes d'amines, le dicyandiamide étant préféré.

11. Procédé de collage de substrats, notamment de substrats métalliques, comprenant les étapes suivantes :
a) l'application d'un adhésif à base de résine époxyde monocomposant thermodurcissable selon l'une quelconque des revendications 1 à 10 sur un premier substrat, notamment un premier substrat métallique ;
b) la mise en contact de l'adhésif à base de résine époxyde appliqué avec un deuxième substrat, notamment un deuxième substrat métallique, pour former un composite adhésif ; et
c) le durcissement de l'adhésif à base de résine époxyde dans le composite adhésif à une température dans la plage allant de 100 à 220 °C.

12. Procédé selon la revendication 11, dans lequel le premier substrat métallique et/ou le deuxième substrat métallique sont choisis parmi l'acier muni d'un revêtement de zinc-magnésium, l'acier galvanisé à chaud muni d'un revêtement comprenant du sulfate de zinc et/ou de l'hydroxysulfate de zinc, l'acier laminé à froid, le magnésium, l'aluminium, un alliage d'aluminium, les substrats métalliques munis d'un adjuvant de façonnage en tant que revêtement, ou un métal, notamment l'acier, muni d'un revêtement en aluminium ou en un alliage d'aluminium, le premier substrat métallique et/ou le deuxième substrat métallique étant de préférence en acier muni d'un revêtement de zinc-magnésium, en acier galvanisé à chaud muni d'un revêtement comprenant du sulfate de zinc et/ou de l'hydroxysulfate de zinc, ou en acier laminé à froid sans revêtement de zinc.

13. Procédé selon la revendication 11 ou 12, dans lequel le premier substrat métallique et/ou le deuxième substrat métallique sont en acier muni d'un revêtement de zinc-magnésium.

14. Article, comprenant un composite adhésif durci, le composite adhésif pouvant être obtenu par un procédé selon l'une quelconque des revendications 11 à 13.

15. Utilisation d'un adhésif à base de résine époxyde monocomposant thermodurcissable selon l'une quelconque des revendications 1 à 10 pour le collage résistant à la chaleur de substrats, notamment de substrats métalliques, de préférence de substrats métalliques en acier muni d'un revêtement de zinc-magnésium, en acier galvanisé à chaud muni d'un revêtement comprenant du sulfate de zinc et/ou de l'hydroxysulfate de zinc, en acier laminé à froid, en magnésium, en aluminium, en un alliage d'aluminium, en substrats métalliques munis d'un adjuvant de façonnage en tant que revêtement ou un métal, notamment l'acier, muni d'un revêtement en aluminium ou en un alliage d'aluminium.
